# FASCICULE DE BREVET EUROPEEN

(11) **EP 3 443 022 B1**
(45) Date de publication et mention de la délivrance du brevet: **26.08.2020**
(21) Numéro de dépôt: 18715788.8
(22) Date de dépôt: 23.03.2018
(51) Int. Cl.: C08G 69/26, C08L 77/06

(54) **COMPOSITION DE POLYAMIDE SEMI-CRISTALLIN DE HAUTE TEMPERATURE DE TRANSITION VITREUSE ET HAUTE TEMPERATURE DE FUSION POUR MATERIAU THERMOPLASTIQUE, SON PROCEDE DE FABRICATION ET SES UTILISATIONS**
HALBKRISTALLINE POLYAMIDZUSAMMENSETZUNG MIT EINER HOHEN GLASÜBERGANGSTEMPERATUR UND EINER HOHEN SCHMELZTEMPERATUR FÜR EIN THERMOPLASTISCHES MATERIAL, HERSTELLUNGSVERFAHREN DAFÜR UND VERWENDUNGEN DAVON
SEMI-CRYSTALLINE POLYAMIDE COMPOSITION HAVING A HIGH GLASS TRANSITION TEMPERATURE AND A HIGH MELTING TEMPERATURE FOR A THERMOPLASTIC MATERIAL, PRODUCTION METHOD THEREOF AND USES OF SAME

(30) Priorité: 24.03.2017 FR 1752485
(43) Date de publication de la demande: 20.02.2019
(73) Titulaire: Arkema France, 92700 Colombes (FR)
(72) Inventeur: CAPELOT, Mathieu, 27300 Bernay (FR)
(86) Numéro de dépôt international: PCT/FR2018/050710
(87) Numéro de publication internationale: WO 2018/172717

(56) Documents cités:
- EP-A1- 2 028 231
- WO-A1-2014/064375
- WO-A1-2018/011493
- WO-A1-2018/011495
- US-A- 3 875 120
- US-A- 3 992 360

## Description

L'invention concerne une nouvelle composition de polyamide semi-cristallin (sc) de haute température de transition vitreuse, à base de bis(aminométhyl)cyclohexane (BAC), pour matériau thermoplastique.

Elle concerne également le procédé de fabrication dudit matériau thermoplastique ainsi que les utilisations de la dite composition pour la fabrication de pièces mécaniques ou de structure à base dudit matériau pour des pièces de matériau ainsi que la pièce qui en résulte et pour des applications dans les domaines de : l'automobile, ferroviaire, marin, transport routier, de l'éolien, du sport, aéronautique et spatial, du bâtiment, des panneaux et des loisirs, ainsi qu'électrique et électronique.

Un grand enjeu dans les matériaux est de trouver une résine polyamide répondant au cahier des charges suivant :
- Haute Tg pour avoir une large gamme de températures de service ;
- Une Tf élevée pour avoir une bonne tenue en température mais suffisamment basse pour être processable notamment par injection;
- Une très bonne aptitude à la cristallisation afin de pouvoir être démoulé rapidement et ainsi être compatible avec des cycles de production intensifs, tels ceux utilisés par exemple dans l'automobile ;
- Une haute rigidité, y compris à chaud, pour pouvoir obtenir les plus hauts modules possibles du matériau final.

Le document CN104211953 décrit une composition de polyamide comprenant de 30 à 99,9% en poids d'une résine polyamide comprenant de 60 à 95% en moles de 10T, de 5 à 40% en moles de 5'T, 5' correspondant à la 2-méthyl-1,5-pentaméthylènediamine, de 0 à 70% en poids d'une charge de renfort et de 0,1 à 50% en poids d'un additif.

La résine de polyamide présente une température de fusion supérieure à 260°C et des proportions molaires de 10T élevées.

EP 550 314 décrit, parmi ses exemples, des compositions (non réactives) de copolyamide en cherchant des températures de fusion supérieures à 250°C et des Tg limitées avec la plupart des exemples cités ayant une Tg trop basse (< 80°C).

EP 1 988 113 décrit une composition de moulage à base d'un copolyamide 10T/6T avec :
- 40 à 95% mol de 10T
- 5 à 40% de 6T.

Sont visés en particulier des polyamides avec des proportions molaires de 10T élevées et de température de fusion élevée et supérieure à 270°C.

WO 2011/003973 décrit des compositions comprenant de 50 à 95 mol% d'un motif à base d'une diamine aliphatique linéaire comportant de 9 à 12 atomes de carbone et d'acide téréphtalique et de 5 à 50% de motif associant l'acide téréphtalique à un mélange de 2,2,4 et 2,4,4 triméthylhexanediamine.

WO 2014/064375 décrit notamment un PA MXDT/10T qui présente un excellent compromis entre les diverses caractéristiques décrites ci-dessus. Malheureusement, le monomère meta-xylènediamine (MXD) utilisé est très sujet aux réactions secondaires, donnant notamment lieu à la formation de ramifications.

Les inconvénients de l'état de l'art, avec l'absence d'un bon compromis entre les performances mécaniques et l'aptitude de mise en oeuvre (facilité de transformation) avec un temps de cycle de production plus court sont surmontés par la solution de la présente invention qui vise des compositions de PA semi-cristallin, présentant un excellent compromis entre des performances mécaniques élevées (tenue mécanique) en particulier à chaud et une mise en oeuvre facile notamment par injection. Il est en effet de haute rigidité et présente une température de transition vitreuse >150°C, une Tf comprise de 290°C à 340°C, ainsi qu'une excellente aptitude à la cristallisation (Tf-Tc <40°C), ce qui en fait une matrice de choix pour une mise en oeuvre notamment par injection ou moulage, en particulier pour l'éolien, l'automobile ou l'aéronautique ou pour l'électrique et l'électronique.

Le choix d'un polymère polyamide semi-cristallin, comme matrice du matériau thermoplastique de l'invention, a comme intérêt par rapport aux polyamides amorphes, des performances mécaniques significativement améliorées notamment à chaud, telles que la résistance au fluage ou à la fatigue. En outre, présenter un point de fusion au-delà de 200°C a pour avantage dans l'automobile d'être compatible avec les traitements par cataphorèse, ce que ne permet pas une structure de type PA amorphe. On recherche une Tg supérieure à 150°C pour assurer de bonnes propriétés mécaniques au matériau thermoplastique sur toute la plage de température d'utilisation, notamment pour l'injection. La cristallinité dudit polymère doit être la plus élevée possible pour optimiser les performances mécaniques et la vitesse de cristallisation et/ou la température de cristallisation la plus élevée possible, ceci pour réduire le temps de moulage avant éjection de la pièce moulée avec un choix sélectif de la composition dudit polyamide semi-cristallin.

L'objet de la présente invention est la mise en oeuvre de nouvelles compositions spécifiques de matériau thermoplastique, en particulier à base de polyamide semi-cristallin, présentant un bon compromis entre des performances mécaniques élevées (tenue mécanique) en particulier à chaud et une mise en oeuvre facile. Plus particulièrement, la solution de l'invention, dans le cas de compositions réactives, permet en utilisant des compositions à base de prépolymères polyamides réactifs semi-cristallins, à la fois une processabilité améliorée en raison de la faible viscosité initiale de la composition, permettant par exemple d'utiliser des pressions d'injection plus faibles, ou de mouler des pièces avec un grand niveau de finesse, mais également des propriétés mécaniques améliorées en raison des hauts poids moléculaires atteignables. Plus particulièrement, la matrice polymère polyamide tout en ayant une Tg élevée et une Tf comme définies, avec une mise en oeuvre facile dudit matériau thermoplastique, doit avoir également une vitesse de cristallisation élevée, caractérisée d'abord par un écart entre température de fusion et de cristallisation Tf-Tc ne dépassant pas 40°C, de préférence ne dépassant pas 30°C. Donc, l'objet de l'invention est de mettre au point une composition de polyamide répondant aux besoins déjà définis ci-dessus :
- Haute Tg pour avoir une large gamme de températures de service ;
- Une Tf comprise de 290°C à 340°C, pour être aisément processable, notamment par injection;
- Une très bonne aptitude à la cristallisation afin de pouvoir être démoulé rapidement et ainsi être compatible avec des cycles de production intensifs, tels ceux utilisés par exemple dans l'automobile ;
- Une haute rigidité, y compris à chaud, pour pouvoir obtenir les plus hauts modules possibles du matériau final.

La présente invention concerne une composition pour matériau thermoplastique comprenant :
- 0 à 70% en poids, préférentiellement 20 à 60% en poids, de fibres de renfort courtes,
- 30 à 100% en poids, préférentiellement 40 à 80% en poids, d'une matrice thermoplastique à base d'au moins un polymère polyamide semi-cristallin,
- 0 à 50% d'additifs et/ou autres polymères,
ledit polymère polyamide semi-cristallin étant:
a) une composition réactive comprenant ou constitué de, au moins un prépolymère polyamide réactif précurseur dudit polymère polyamide semi-cristallin,
   ou en alternative à a)
b) une composition non réactive d'au moins un polymère polyamide, ladite composition étant celle de ladite matrice thermoplastique définie ci-dessus, et ledit prépolymère polyamide réactif de la composition a) et ledit polymère polyamide de la composition b) comprenant ou étant constitués d'au moins un copolyamide BACT/XT dans lequel :
   - BACT est une unité à motif amide présente à un taux molaire allant compris de plus de 70% à 99,1%, de préférence de 80 à 99%, plus préférentiellement de 90 à 99%, où BAC est choisi parmi la 1,3-bis (aminométhyle) cyclohexyle (1,3 BAC), la 1,4-bis(aminométhyle)cyclohexyle (1,4 BAC) et un mélange de ceux-ci, et T est l'acide téréphtalique,
   - XT est une unité à motif amide présente à un taux molaire allant de 0,9 à moins de 30%, de préférence de 1 à 20%, plus préférentiellement de 1 à 10%, où X est une diamine aliphatique linéaire en C9 à C18, de préférence en C9, C10, C11 et C12, et où T est l'acide téréphtalique, préférentiellement en C10, C11 et C12.
   - dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
   - dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
   - dans le copolyamide, pas plus de 30% en mole, de préférence pas plus de 20% en mole, de préférence pas plus de 10% en mole, par rapport à la quantité totale des monomères, peut être formée par des lactames ou des acides aminocarboxyliques, et
   - à condition que la somme des monomères qui remplacent l'acide téréphtalique, la BAC et X ne dépasse pas une concentration de 30% en mole, de préférence 20% en mole, de préférence 10% en mole, par rapport à la quantité totale des monomères utilisés dans le copolyamide, et
   - à condition que des unités BACT et XT soient toujours présentes dans ledit polymère polyamide.

Il est bien évident que les remplacements partiels de monomères ci-dessus définis s'entendent dans le respect des gammes de BACT et XT ci-dessus définies, c'est-à-dire que lorsque BACT est présent par exemple en proportion de plus 70 à 99,1%, le remplacement partiel éventuel de BAC et/ou T conduira de toutes les manières à une proportion finale de plus de 70% en BACT et de même pour XT.

Ledit polymère polyamide semi-cristallin est donc le polymère polyamide semi-cristallin qui est la base de la matrice thermoplastique et qui peut être obtenu à partir de la composition réactive a) qui correspond :
soit un prépolymère polyamide terminé di-NH2 ou di-CO2H qui peut réagir respectivement avec un autre prépolymère polyamide terminé di-CO2H ou di-NH2 pour conduire audit polymère polyamide semi-cristallin,
soit un prépolymère terminé NH2 et CO2H qui peut réagir avec lui-même, pour conduire audit polymère polyamide semi-cristallin,
soit un prépolymère qui peut réagir ou avec un allongeur de chaîne, pour conduire audit polymère polyamide semi-cristallin,
ou le polymère polyamide semi-cristallin est déjà présent dans la composition non réactive b).

En d'autres termes, la présente invention concerne une composition pour matériau thermoplastique comprenant :
- 0 à 70% en poids, préférentiellement 20 à 60% en poids, de fibres de renfort courtes,
- 30 à 100% en poids, préférentiellement 40 à 80% en poids, d'une matrice thermoplastique à base d'au moins un polymère polyamide semi-cristallin,
- 0 à 50% d'additifs et/ou autres polymères,
ladite composition étant:
a) une composition réactive comprenant ou constitué de, au moins un prépolymère polyamide réactif précurseur dudit polymère polyamide semi-cristallin, ou en alternative à a),
b) une composition non réactive d'au moins un polymère polyamide, ladite composition étant celle de ladite matrice thermoplastique définie ci-dessus,
et ledit prépolymère polyamide réactif de la composition a) et ledit polymère polyamide de la composition b) comprenant ou étant constitués d'au moins un copolyamide BACT/XT dans lequel :
- BACT est une unité à motif amide présente à un taux molaire allant de plus de 70% à 99,1%, de préférence de 80 à 99%, plus préférentiellement de 90 à 99%, où BAC est choisi parmi la 1,3-bis(aminométhyle)cyclohexyle (1,3 BAC), la 1,4-bis (aminométhyle)cyclohexyle (1,4 BAC) et un mélange de ceux-ci, et T est l'acide téréphtalique,
- XT est une unité à motif amide présente à un taux molaire allant de 0,9 à moins de 30%, de préférence de 1 à 20%, plus préférentiellement de 1 à 10%, où X est une diamine aliphatique linéaire en C9 à C18, de préférence en C9, C10, C11 et C12, et où T est l'acide téréphtalique, préférentiellement en C10, C11 et C12,
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 20%, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 20% en mole, de préférence 10% en mole, par rapport à la quantité totale des monomères utilisés dans le copolyamide, et
- à condition que des unités BACT et XT soient toujours présentes dans ledit polymère polyamide.

L'expression « ledit prépolymère polyamide réactif de la composition a) et ledit polymère polyamide de la composition b) comprenant ou étant constitués d'au moins un copolyamide BACT/XT signifie que le prépolymère polyamide réactif de la composition a) ou ledit polymère polyamide de la composition b) sont constitués exclusivement d'unités à motifs amide BACT et XT dans des proportions respectives définies ci-dessus, soit le prépolymère polyamide réactif de la composition a) ou ledit polymère polyamide de la composition b) comprennent des motifs amide BACT et XT dans des proportions respectives définies ci-dessus mais également d'autre unités à motifs amide.

Avantageusement, la proportion d'unités à motifs amide BACT et XT dans le prépolymère polyamide réactif de la composition a) ou ledit polymère polyamide de la composition b) est supérieure à 50%, notamment supérieure à 60%, en particulier supérieure à 70%, préférentiellement supérieure à 80%, notamment supérieure à 90%.

La présente invention concerne donc une composition pour matériau thermoplastique comprenant :
- 0 à 70% en poids, préférentiellement 20 à 60% en poids, de fibres de renfort courtes,
- 30 à 100% en poids, préférentiellement 40 à 80% en poids, d'une matrice thermoplastique à base d'au moins un polymère polyamide semi-cristallin,
- 0 à 50% d'additifs et/ou autres polymères,
ledit polymère polyamide semi-cristallin comprenant ou étant constitués d'au moins un copolyamide BACT/XT dans lequel :
- BACT est une unité à motif amide présente à un taux molaire allant de plus de 70% à 99,1%, de préférence de 80 à 99%, plus préférentiellement de 90 à 99%, où BAC est choisi parmi la 1,3-bis(aminométhyle)cyclohexyle (1,3 BAC), la 1,4-bis (aminométhyle)cyclohexyle (1,4 BAC) et un mélange de ceux-ci, et T est l'acide téréphtalique,
- XT est une unité à motif amide présente à un taux molaire allant de 0,9 à moins de 30%, de préférence de 1 à 20%, plus préférentiellement de 1 à 10%, où X est une diamine aliphatique linéaire en C9 à C18, de préférence en C9, C10, C11 et C12, et où T est l'acide téréphtalique, préférentiellement en C10, C11 et C12,
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 20%, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 20% en mole, de préférence 10% en mole, par rapport à la quantité totale des monomères utilisés dans le copolyamide, et
- à condition que des unités BACT et XT soient toujours présentes dans ledit polymère polyamide.

La composition selon l'invention peut comporter des fibres de renfort courtes ou renforts fibreux courts.

De préférence, les fibres dites courtes sont de longueur comprise entre 200 et 400 µm. Ces fibres de renfort courtes peuvent être choisies parmi :
- les fibres naturelles
- les fibres minérales, celles-ci ayant des températures de fusion Tf' élevées et supérieures à la température de fusion Tf dudit polyamide semi-cristallin de l'invention et supérieures à la température de polymérisation et/ou de mise en œuvre.
- les fibres polymériques ou de polymère ayant une température de fusion Tf' ou à défaut de Tf', une température de transition vitreuse Tg', supérieure à la température de polymérisation ou supérieure à la température de fusion Tf dudit polyamide semi-cristallin constituant ladite matrice du matériau thermoplastique et supérieure à la température de mise en oeuvre.
- ou les mélanges des fibres citées ci-haut.

Comme fibres minérales convenables pour l'invention, on peut citer les fibres de carbone, ce qui inclut les fibres de nanotubes ou nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine (Al2O3) ; les fibres métallisées comme les fibres de verre métallisées et les fibres de carbone métallisées ou les mélanges des fibres précitées.

Plus particulièrement, ces fibres peuvent être choisies comme suit :
- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme Al2O3, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :
- les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bis-maléimide, les aminoplastes résultant de la réaction d'une amine telle que la mélamine avec un aldéhyde tel que le glyoxal ou le formaldéhyde,
- les fibres de polymères thermoplastiques et plus particulièrement choisies parmi :
- les fibres de polyamides, en particulier les fibres de polyphtalamides,
- les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides,
- les fibres de copolymères blocs de polyamide tel que le polyamide/polyéther, les fibres de polyaryléthers cétones (PAEK) telles que la polyétheréther cétone (PEEK), la polyéthercétone cétone (PEKK), la polyéthercétoneéthercétone cétone (PEKEKK).

Les fibres de renfort courtes préférées sont des fibres courtes choisies parmi les : fibres de carbone, y compris métallisées, fibres de verre, y compris métallisées de type E, R, S2, fibres d'aramides (comme le Kevlar®) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres naturelles peuvent être choisies parmi les fibres de lin, de ricin, de bois, de sisal, de kénaf, de noix de coco, de chanvre et de jute.

De préférence, les fibres de renfort présentes dans la composition selon l'invention sont choisies parmi les fibres de verre, les fibres de carbone, les fibres de lin et leurs mélanges, et plus préférentiellement les fibres de verre et les fibres de carbone, et plus préférentiellement encore les fibres de verre.

Concernant les additifs, sans être limités à ceux-ci, la composition selon une variante préférée de l'invention comprend plus particulièrement, des additifs spécifiques tels que des stabilisants thermiques, en particulier ces stabilisants sont des antioxydants contre la thermo-oxydation et/ou la photo-oxydation du polymère de la matrice thermoplastique et sont des stabilisants organiques ou minéraux.

L'expression « stabilisant organique » ou plus généralement une « combinaison de stabilisants organiques », désigne un antioxydant primaire de type phénol, un antioxydant secondaire de type phosphite et voire éventuellement d'autres stabilisants comme un HALS, ce qui signifie Hindered Amine Light Stabiliser ou stabilisant lumière de type amine encombrée (par exemple le Tinuvin 770 de la société Ciba), un anti-UV (par exemple le Tinuvin 312 de la société Ciba), un stabilisant phénolique ou à base de phosphore. On peut également utiliser des antioxydants de type amine tel le Naugard 445 de la société Crompton ou encore des stabilisants polyfonctionnels tel le Nylostab S-EED de la société Clariant.

Le stabilisant organique présent peut être choisi, sans que cette liste soit restrictive, parmi :
- les anti-oxydants phénoliques, par exemple l'Irganox 245, l'Irganox 1010, l'Irganox 1098 de la société Ciba, l'Irganox MD1024 de la société Ciba, le Lowinox 44B25 de la société Great Lakes, l'ADK Stab AO-80 de la société Adeka Palmarole.
- les stabilisants à base de phosphore, comme les phosphites, par exemple l'Irgafos 168 de la société Ciba,
- un absorbeur UV, tel le Tinuvin 312 de la société Ciba,
- un HALS, comme précédemment mentionné,
- un stabilisant de type amine, tel le Naugard 445 de la société Crompton, ou encore de type amine encombrée tel le Tinuvin 770 de la société Ciba,
- un stabilisant polyfonctionnel tel le Nylostab S-EED de la société Clariant.

On peut bien évidemment envisager un mélange de deux, ou plus, de ces stabilisants organiques.

L'expression « stabilisant minéral » désigne un stabilisant à base de cuivre ou à base d'un oxyde métallique tel que décrit dans US2008/0146717. A titre d'exemple de tels stabilisants minéraux, on peut citer les halogénures et les acétates de cuivre ou les oxydes de fer tels que FeO, Fe₂O₃, Fe₃O₄ ou un mélange de ceux-ci Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Ces stabilisants minéraux sont plus particulièrement employés, lorsque les structures doivent avoir une résistance thermique améliorée à long terme dans l'air chaud, notamment pour des températures supérieures ou égales à 100-120°C, car ils tendent à empêcher les coupures de chaînes polymériques.

Plus particulièrement, par stabilisant à base de cuivre, on entend un composé comprenant au moins un atome de cuivre, notamment sous forme ionique, ionisable, par exemple sous forme de complexe.

Le stabilisant à base de cuivre peut être choisi parmi le chlorure cuivreux, le chlorure cuivrique, le bromure cuivreux, le bromure cuivrique, l'iodure cuivreux, l'iodure cuivrique, l'acétate cuivreux et l'acétate cuivrique. On peut citer les halogénures, les acétates d'autres métaux tels l'argent en association avec le stabilisant à base de cuivre. Ces composés à base de cuivre sont typiquement associés à des halogénures de métaux alcalins. Un exemple bien connu est le mélange de CuI et KI, où le ratio CuI:KI est typiquement compris entre 1:5 à 1:15. Un exemple d'un tel stabilisant est le Polyad P201 de la société Ciba.

On trouvera de plus amples détails sur les stabilisants à base de cuivre dans le brevet US 2,705,227. Plus récemment, sont apparus des stabilisants à base de cuivre tel les cuivres complexés comme les Bruggolen H3336, H3337, H3373 de la société Brüggemann.

Avantageusement, le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

L'additif peut également être un modifiant choc, avantageusement constitué par un polymère présentant un module de flexion inférieur à 100 MPa mesuré selon la norme ISO 178 et de Tg inférieure à 0°C (mesurée selon la norme 11357-2 : 2013 au niveau du point d'inflexion du thermogramme DSC), en particulier une polyoléfine, couplé ou non avec un Peba (polyéther bloc amide) ayant un module de flexion < 200 MPa.

La polyoléfine du modifiant choc peut être fonctionnalisée ou non fonctionnalisée ou être un mélange d'au moins une fonctionnalisée et/ou d'au moins une non fonctionnalisée.

Les additifs peuvent également être des charges qui peuvent être notamment toute charge connue de l'homme du métier dans le domaine des matériaux thermoplastiques. Il peut notamment s'agir de charges conductrices de la chaleur et/ou conductrices de l'électricité, telles que de la poudre de métal, du noir de carbone pulvérulent, des fibrilles de carbone, des nanotubes de carbone (NTC), de carbure de silicium, de carbonitrure de bore, de nitrure de bore ou de silicium. On pourra se reporter à ce sujet à la demande WO 2010/130930 de la Demanderesse.

Les fibres de renfort, quelles qu'elles soient, longues, courtes ou continues, sont exclues des additifs et en particulier le terme « charge inorganique » exclut les fibres de renfort longues, courtes ou continues.

Les additifs peuvent être aussi des agents ignifugeants sans halogène, tels que décrits dans US 2008/0274355 et notamment un sel métallique choisi parmi un sel métallique de l'acide phosphinique, un sel métallique de l'acide diphosphinique, un polymère contenant au moins un sel métallique de l'acide phosphinique, un polymère contenant au moins un sel métallique de l'acide diphosphinique ou du phosphore rouge, un oxyde d'antimoine, un oxyde de zinc, un oxyde de fer, un oxyde de magnésium ou des borates métalliques tels que un borate de zinc ou encore des pyrophosphates de mélamine et des cyanurates de mélamine. Ils peuvent également être des agents ignifugeants halogénés tels que un polystyrène bromé ou polybromé, un polycarbonate bromé ou un phénol bromé.

Avantageusement, l'additif est choisi parmi un antioxydant, un stabilisant à la chaleur, un absorbeur d'UV, un stabilisant à la lumière, un modifiant choc, un lubrifiant, une charge inorganique, un agent ignifugeant, un agent nucléant, notamment une charge minérale telle que du talc, et un colorant.

L'expression « autres polymères » désigne tout polymère thermoplastique et notamment un polymère polyamide, notamment un polyamide aliphatique, cycloaliphatique ou aromatique, et qui peut être microcristallin ou amorphe.

L'expression « composition non réactive » signifie, que la composition est à base de polymère polyamide dont le poids moléculaire n'est plus susceptible d'évoluer significativement, c'est-à-dire que sa masse moléculaire en nombre (Mn) évolue de moins de 50% lors de sa mise en oeuvre et correspondant donc au polymère polyamide final de la matrice thermoplastique.

Ces polyamides selon la composition b) sont non réactifs, soit par le faible taux de fonctions (résiduelles) réactives présentes, en particulier avec un taux desdites fonctions < 120 meq/kg, soit par la présence du même type de fonctions terminales en bout de chaîne et donc non réactives entre elles, soit par la modification et blocage desdites fonctions réactives par un composant réactif monofonctionnel, par exemple pour les fonctions amines par réaction de modification avec un monoacide ou un monoisocyanate et pour des fonctions carboxyles par réaction avec une monoamine.

Avantageusement, le poids moléculaire en nombre (Mn) dudit polymère polyamide final de la matrice thermoplastique dudit matériau est de préférence dans une plage allant de 6000 à 40000 g/mol, de préférence de 10000 à 30000 g/mol tel que déterminé par le calcul à partir du taux des fonctions terminales déterminé par titration potentiométrique en solution et la fonctionnalité desdits prépolymères ou par RMN. Ces valeurs Mn peuvent correspondre à des viscosités inhérentes supérieures ou égales à 0,7, telles que déterminées selon la norme ISO 307:2007 mais en changeant le solvant (utilisation du m-crésol à la place de l'acide sulfurique et la température étant de 20°C).

A l'opposé, l'expression « composition réactive » signifie que le poids moléculaire de ladite composition réactive va évoluer durant la mise en oeuvre par réaction de prépolymères réactifs entre eux par condensation ou avec un allongeur de chaîne par polyaddition et sans élimination de sous-produits volatils pour conduire au polymère polyamide final de la matrice thermoplastique.

La 1,3-BAC (ou 1,3 bis(aminométhyl)cyclohexane, N° CAS : 2579-20-6) est un monomère diamine cycloaliphatique obtenu notamment par hydrogénation de la meta-xylène diamine (MXDA). La 1,3-BAC existe sous la forme de deux isomères, cis et trans, le N° CAS : 2579-20-6 correspondant à un mélange d'isomères.

La 1,4-BAC (ou 1,4 bis(aminométhyl)cyclohexane, N° CAS : 2549-07-9) est un monomère diamine cycloaliphatique obtenu notamment par hydrogénation de la para-xylène diamine (PXDA). La 1,4-BAC existe sous la forme de deux isomères, cis et trans, le N° CAS : 2549-07-9 correspondant à un mélange d'isomères.

Avantageusement, la 1,3 BAC ou la 1,4 BAC utilisée dans l'unité BACT est un mélange d'isomères cis et trans en proportion respective de 0/100 à 100/0, notamment de 75/25 à 25/75.

Avantageusement, la proportion d'isomère cis dans la 1,3 BAC est supérieure à 60%, préférentiellement supérieure à 70%, en particulier supérieure à 80%, notamment supérieure à 90%.

Avantageusement, la proportion d'isomère trans dans la 1,4 BAC est supérieure à 60%, préférentiellement supérieure à 70%, en particulier supérieure à 80%, notamment supérieure à 90%.

BAC et/ou X peuvent être remplacés, indépendamment l'une de l'autre, jusqu'à 30% en mole par d'autres diamines ci-dessus définies, notamment par une diamine aliphatique, linéaire ou branchée, une diamine cycloaliphatique ou une diamine arylaromatique telle que la meta-xylène diamine (MXDA).

A titre d'exemple, la diamine aliphatique linéaire ou branchée est choisie parmi la 1, 4-butanediamine, la 1,5-pentanediamine, la 2-methyl-1,5-pentanediamine (MPMD), la 1,6 hexanediamine, la 1,8-octanediamine (OMDA), la 1,9-nonanediamine (NMDA), la 2-méthyl-1,8-octane-diamine (MODA), la 2,2,4-triméthylhexamethylenediamine (TMHMD), la 2,4,4-triméthylhexamethylenediamine (TMHMD), la 5-méthyl-1,9-nonanediamine, 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine et la 1,18-octadécanediamine.

La diamine cycloaliphatique peut être choisie parmi l'isophoronediamine, la norbornanedimethylamine, la 4,4'-diaminodicyclohexylméthane (PACM), le 2,2-(4,4'-diamino-dicyclohexyl)propane (PACP), et le 3,3'-diméthyl-4,4'-diaminodicyclohexyléthane (MACM).

T peut être remplacé jusqu'à 30% en mole par d'autres diacides carboxyliques ci-dessus définies, notamment par d'autres diacides carboxyliques aromatiques, aliphatiques ou cycloaliphatiques.

Les diacides carboxyliques aromatiques peuvent être choisis parmi l'acide naphthalenedicarboxylique (NDA) et l'acide isophtalique (IPA).

Les diacides carboxyliques aliphatiques peuvent être choisis parmi l'acide adipique, l'acide subérique, l'acide azélaïque, l'acide sébacique, l'acide undécanedioïque, l'acide dodécanedioïque, l'acide brassylique, l'acide tétradecanedioïque, l'acide pentadécanedioïque, l'acide hexadécanedioiïque, l'acide octadécanedioïque et des acides gras dimérisés.

Les diacides carboxyliques cycloaliphatiques peuvent être choisis parmi l'acide cis- et/ou trans-cyclohexane-1,4-dicarboxylique et/ou l'acide cis- et/ou trans-cyclohexane-1,3-dicarboxylique (CHDA).

BAC et/ou X et/ou T peuvent être remplacés, indépendamment l'un de l'autre, jusqu'à 30% en mole par des lactames ou des acides aminocarboxyliques.

Les lactames et acides aminocarboxyliques peuvent être choisi parmi le caprolactame (CL), l'acide α,ω-aminocaproïque, l'acide α,ω-aminononanoïque, l'acide α,ω-aminoundécanoïque (AUA), le lauryllactame (LL) et l'acide α,ω-aminododécanoïque (ADA).

30% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Avantageusement, 20% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Avantageusement, 10% en mole maximum, par rapport à la somme totale des monomère BAC, X et T, de remplacement que ce soit par une autre diamine, un autre diacide, un lactame ou un acide aminocarboxylique ou un mélange quelconque de ceux-ci est possible.

Dans un mode de réalisation avantageux, la présente invention concerne l'une des compositions pour matériau thermoplastique n° 1 à 12 définie ci-dessous, ladite composition comprenant un polymère polyamide semi-cristallin, optionnellement des fibres de renfort courtes, ledit polymère polyamide semi-cristallin comprenant un copolyamide BACT/XT dans les proportions définies dans le tableau I ci-dessous :

**Tableau I**

| Composition N° | Polymère polyamide semi-cristallin % en poids | Fibres de renfort courtes % en poids | BACT % molaire | XT % molaire |
|---|---|---|---|---|
| 1 | 30-100 | 0-70 | >70-99,1 | 0,9-<30 |
| 2 | 30-100 | 0-70 | 80-99 | 1-20 |
| 3 | 30-100 | 0-70 | 90-99 | 1-10 |
| 4 | 40-80 | 0-70 | >70-99,1 | 0,9-<30 |
| 5 | 40-80 | 0-70 | 80-99 | 1-20 |
| 6 | 40-80 | 0-70 | 90-99 | 1-10 |
| 7 | 30-100 | 20-60 | >70-99,1 | 0,9-<30 |
| 8 | 30-100 | 20-60 | 80-99 | 1-20 |
| 9 | 30-100 | 20-60 | 90-99 | 1-10 |
| 10 | 40-80 | 20-60 | >70-99,1 | 0,9-<30 |
| 11 | 40-80 | 20-60 | 80-99 | 1-20 |
| 12 | 40-80 | 20-60 | 90-99 | 1-10 |

Avantageusement, les compositions 1 à 12 comprennent de 0 à 50% en poids d'additifs et/ou d'autres polymères.

Avantageusement, lesdites compositions sont constituées d'un polymère polyamide semi-cristallin, optionnellement des fibres de renfort courtes, et de 0 à 50% en poids d'additifs et/ou d'autres polymères, ledit polymère polyamide semi-cristallin comprenant un copolyamide BACT/XT dans les proportions définies dans le tableau I.

Avantageusement, lesdites compositions sont constituées d'un polymère polyamide semi-cristallin, optionnellement des fibres de renfort courtes, et de 0 à 50% en poids d'additifs et/ou d'autres polymères, ledit polymère polyamide semi-cristallin étant constitué d'un copolyamide BACT/XT dans les proportions définies dans le tableau I.

Avantageusement, la proportion d'additifs et/ou d'autres polymères dans les compositions définies ci-dessus est de plus de 0 à 50% en poids.

Avantageusement, dans les compositions ci-dessus définie, X est une diamine en C9, C10, C11 et C12, en particulier en C10, C11 et C12.

Les Inventeurs ont donc trouvés de manière inattendue que les compositions de l'invention présentait une excellente aptitude à la cristallisation, une haute Tg et Tf, et surtout une plus haute enthalpie (et donc plus haut module à chaud) que les compositions de l'art antérieur.

Dans un mode de réalisation avantageux, la présente invention concerne une composition telle que définie ci-dessus, dans laquelle ledit polymère polyamide semi-cristallin présente une température de fusion Tf comprise de 290°C à 340°C, de préférence comprise de 300°C à 330°C, plus préférentiellement comprise de 310°C à 330°C, telle que déterminée selon la norme ISO 11357-3 (2013).

Dans un mode de réalisation avantageux, la présente invention concerne une composition telle que définie ci-dessus, dans laquelle ledit polymère polyamide semi-cristallin présente une température de transition vitreuse Tg > 150°C, de préférence > 160°C, plus préférentiellement > 170°C, déterminée selon la norme ISO 11357-2 :2013.

Avantageusement, la Tg est comprise de 155 à 190°C.

Dans un mode de réalisation avantageux, la présente invention concerne une composition telle que définie ci-dessus, dans laquelle ledit polymère polyamide semi-cristallin présente un écart entre la température de fusion et la température de cristallisation Tf-Tc < 40°C, préférentiellement < 30°C, déterminé selon la norme ISO 11357-3 :2013.

Dans un mode de réalisation avantageux, la présente invention concerne une composition telle que définie ci-dessus, caractérisée en ce que l'enthalpie de cristallisation du polymère polyamide semi-cristallin, mesurée en Calorimétrie Différentielle à Balayage (DSC) selon la Norme ISO 11357-3:2013, est supérieure à 40 J/g, de préférence supérieure à 45 J/g, et encore plus préférentiellement 50J/g.

Dans un mode de réalisation avantageux, la présente invention concerne une composition telle que définie ci-dessus, caractérisée en ce que ledit polymère polyamide semi-cristallin présente une température de fusion : Tf comprise de 290°C à 340°C et une Tg >150°C.

Dans un mode de réalisation avantageux, la présente invention concerne une composition telle que définie ci-dessus, caractérisée en ce que ledit polymère polyamide semi-cristallin présente une température de fusion : Tf comprise de 290°C à 340°C et une Tg >160°C.

Dans un mode de réalisation avantageux, la présente invention concerne une composition telle que définie ci-dessus, caractérisée en ce que ledit polymère polyamide semi-cristallin présente une température de fusion : Tf comprise de 290°C à 340°C et une Tg >170°C.

Dans un mode de réalisation avantageux, la présente invention concerne une composition telle que définie ci-dessus, caractérisée en ce que ledit polymère polyamide semi-cristallin présente une température de fusion : Tf comprise de 300°C à 330°C et une Tg >150°C.

Dans un mode de réalisation avantageux, la présente invention concerne une composition telle que définie ci-dessus, caractérisée en ce que ledit polymère polyamide semi-cristallin présente une température de fusion : Tf comprise de 300°C à 330°C et une Tg >160°C.

Dans un mode de réalisation avantageux, la présente invention concerne une composition telle que définie ci-dessus, caractérisée en ce que ledit polymère polyamide semi-cristallin présente une température de fusion : Tf comprise de 300°C à 330°C et une Tg >170°C.

Dans un mode de réalisation avantageux, la présente invention concerne une composition telle que définie ci-dessus, caractérisée en ce que ledit polymère polyamide semi-cristallin présente une température de fusion : Tf comprise de 310°C à 330°C et une Tg >150°C.

Dans un mode de réalisation avantageux, la présente invention concerne une composition telle que définie ci-dessus, caractérisée en ce que ledit polymère polyamide semi-cristallin présente une température de fusion : Tf comprise de 310°C à 330°C et une Tg >160°C.

Dans un mode de réalisation avantageux, la présente invention concerne une composition telle que définie ci-dessus, caractérisée en ce que ledit polymère polyamide semi-cristallin présente une température de fusion : Tf comprise de 310°C à 330°C et une Tg >170°C.

Dans un mode de réalisation avantageux, la présente invention concerne une composition telle que définie ci-dessus, caractérisée en ce que ledit polymère polyamide semi-cristallin présente les caractéristiques suivantes (tableau II) :

**Tableau II**

| Composition N° | Compositions initiales | Tf (°C) | Tg (°C) | Tf-Tc (°C) | Delta Hc (J/g) |
|---|---|---|---|---|---|
| 13 | Compositions 1 à 12 | 290-340 | >150°C | | |
| 14 | Compositions 1 à 12 | 290-340 | >160°C | | |
| 15 | Compositions 1 à 12 | 290-340 | >170°C | | |
| 16 | Compositions 1 à 12 | 300-330 | >150°C | | |
| 17 | Compositions 1 à 12 | 300-330 | >160°C | | |
| 18 | Compositions 1 à 12 | 300-330 | >170°C | | |
| 19 | Compositions 1 à 12 | 310-330 | >150°C | | |
| 20 | Compositions 1 à 12 | 310-330 | >160°C | | |
| 21 | Compositions 1 à 12 | 310-330 | >170°C | | |
| 22 | Compositions 1 à 12 | 290-340 | >150°C | <40 | |
| 23 | Compositions 1 à 12 | 290-340 | >160°C | <40 | |
| 24 | Compositions 1 à 12 | 290-340 | >170°C | <40 | |
| 25 | Compositions 1 à 12 | 300-330 | >150°C | <40 | |
| 26 | Compositions 1 à 12 | 300-330 | >160°C | <40 | |
| 27 | Compositions 1 à 12 | 300-330 | >170°C | <40 | |
| 28 | Compositions 1 à 12 | 310-330 | >150°C | <40 | |
| 29 | Compositions 1 à 12 | 310-330 | >160°C | <40 | |
| 30 | Compositions 1 à 12 | 310-330 | >170°C | <40 | |
| 31 | Compositions 1 à 12 | 290-340 | >150°C | <30 | |
| 32 | Compositions 1 à 12 | 290-340 | >160°C | <30 | |
| 33 | Compositions 1 à 12 | 290-340 | >170°C | <30 | |
| 34 | Compositions 1 à 12 | 300-330 | >150°C | <30 | |
| 35 | Compositions 1 à 12 | 300-330 | >160°C | <30 | |
| 36 | Compositions 1 à 12 | 300-330 | >170°C | <30 | |
| 37 | Compositions 1 à 12 | 310-330 | >150°C | <30 | |
| 38 | Compositions 1 à 12 | 310-330 | >160°C | <30 | |
| 39 | Compositions 1 à 12 | 310-330 | >170°C | <30 | |
| 40 | Compositions 1 à 12 | 290-340 | >150°C | <40 | >40 |
| 41 | Compositions 1 à 12 | 290-340 | >160°C | <40 | >40 |
| 42 | Compositions 1 à 12 | 290-340 | >170°C | <40 | >40 |
| 43 | Compositions 1 à 12 | 300-330 | >150°C | <40 | >40 |
| 44 | Compositions 1 à 12 | 300-330 | >160°C | <40 | >40 |
| 45 | Compositions 1 à 12 | 300-330 | >170°C | <40 | >40 |
| 46 | Compositions 1 à 12 | 310-330 | >150°C | <40 | >40 |
| 47 | Compositions 1 à 12 | 310-330 | >160°C | <40 | >40 |
| 48 | Compositions 1 à 12 | 310-330 | >170°C | <40 | >40 |
| 49 | Compositions 1 à 12 | 290-340 | >150°C | <30 | >40 |
| 50 | Compositions 1 à 12 | 290-340 | >160°C | <30 | >40 |
| 51 | Compositions 1 à 12 | 290-340 | >170°C | <30 | >40 |
| 52 | Compositions 1 à 12 | 300-330 | >150°C | <30 | >40 |
| 53 | Compositions 1 à 12 | 300-330 | >160°C | <30 | >40 |
| 54 | Compositions 1 à 12 | 300-330 | >170°C | <30 | >40 |
| 55 | Compositions 1 à 12 | 310-330 | >150°C | <30 | >40 |
| 56 | Compositions 1 à 12 | 310-330 | >160°C | <30 | >40 |
| 57 | Compositions 1 à 12 | 310-330 | >170°C | <30 | >40 |
| 58 | Compositions 1 à 12 | 290-340 | >150°C | <40 | >45 |
| 59 | Compositions 1 à 12 | 290-340 | >160°C | <40 | >45 |
| 60 | Compositions 1 à 12 | 290-340 | >170°C | <40 | >45 |
| 61 | Compositions 1 à 12 | 300-330 | >150°C | <40 | >45 |
| 62 | Compositions 1 à 12 | 300-330 | >160°C | <40 | >45 |
| 63 | Compositions 1 à 12 | 300-330 | >170°C | <40 | >45 |
| 64 | Compositions 1 à 12 | 310-330 | >150°C | <40 | >45 |
| 65 | Compositions 1 à 12 | 310-330 | >160°C | <40 | >45 |
| 66 | Compositions 1 à 12 | 310-330 | >170°C | <40 | >45 |
| 67 | Compositions 1 à 12 | 290-340 | >150°C | <30 | >45 |
| 68 | Compositions 1 à 12 | 290-340 | >160°C | <30 | >45 |
| 69 | Compositions 1 à 12 | 290-340 | >170°C | <30 | >45 |
| 70 | Compositions 1 à 12 | 300-330 | >150°C | <30 | >45 |
| 71 | Compositions 1 à 12 | 300-330 | >160°C | <30 | >45 |
| 72 | Compositions 1 à 12 | 300-330 | >170°C | <30 | >45 |
| 73 | Compositions 1 à 12 | 310-330 | >150°C | <30 | >45 |
| 74 | Compositions 1 à 12 | 310-330 | >160°C | <30 | >45 |
| 75 | Compositions 1 à 12 | 310-330 | >170°C | <30 | >45 |
| 76 | Compositions 1 à 12 | 290-340 | >150°C | <40 | >50 |
| 77 | Compositions 1 à 12 | 290-340 | >160°C | <40 | >50 |
| 78 | Compositions 1 à 12 | 290-340 | >170°C | <40 | >50 |
| 79 | Compositions 1 à 12 | 300-330 | >150°C | <40 | >50 |
| 80 | Compositions 1 à 12 | 300-330 | >160°C | <40 | >50 |
| 81 | Compositions 1 à 12 | 300-330 | >170°C | <40 | >50 |
| 82 | Compositions 1 à 12 | 310-330 | >150°C | <40 | >50 |
| 83 | Compositions 1 à 12 | 310-330 | >160°C | <40 | >50 |
| 84 | Compositions 1 à 12 | 310-330 | >170°C | <40 | >50 |
| 85 | Compositions 1 à 12 | 290-340 | >150°C | <30 | >50 |
| 86 | Compositions 1 à 12 | 290-340 | >160°C | <30 | >50 |
| 87 | Compositions 1 à 12 | 290-340 | >170°C | <30 | >50 |
| 88 | Compositions 1 à 12 | 300-330 | >150°C | <30 | >50 |
| 89 | Compositions 1 à 12 | 300-330 | >160°C | <30 | >50 |
| 90 | Compositions 1 à 12 | 300-330 | >170°C | <30 | >50 |
| 91 | Compositions 1 à 12 | 310-330 | >150°C | <30 | >50 |
| 92 | Compositions 1 à 12 | 310-330 | >160°C | <30 | >50 |
| 93 | Compositions 1 à 12 | 310-330 | >170°C | <30 | >50 |

Dans un mode de réalisation avantageux, la présente invention concerne une composition telle que définie ci-dessus, caractérisée en ce que la BAC est la 1,3 BAC.

Avantageusement, la 1,3 BAC est un mélange d'isomères cis et trans en proportion respective de 0/100 à 100/0, notamment de 75/25 à 25/75.

Avantageusement, la proportion d'isomère cis dans la 1,3 BAC est supérieure à 60%, préférentiellement supérieure à 70%, en particulier supérieure à 80%, notamment supérieure à 90%.

Dans un mode de réalisation avantageux, la présente invention concerne une composition telle que définie ci-dessus, dans laquelle la BAC est la 1,3 BAC et XT est choisi parmi 9T, 10T, 11T et 12T, plus préférentiellement 10T, 11T et 12T.

Avantageusement, XT est 11T ou 12T.

Avantageusement, XT est 10T, 10 correspondant à la 1,10 décanediamine.

Dans un mode de réalisation avantageux, la présente invention concerne une composition telle que définie ci-dessus, dans laquelle la somme des monomères qui remplacent l'acide téréphtalique, la BAC et X est égale à 0. Dans ce dernier mode de réalisation, il n'y a donc plus de substitution possible des monomères dans les compositions 1 à 93 telles que ci-dessus définies.

Dans un mode de réalisation avantageux, la présente invention concerne une composition telle que définie ci-dessus, caractérisée en ce que ledit polymère polyamide semi cristallin est une composition non réactive selon b).

Cela signifie que ladite composition est la même que celle du polymère (polyamide) de matrice dudit matériau thermoplastique car il y a absence de réaction dans cette composition, laquelle reste stable et non évolutive en terme de masse moléculaire lors de son chauffage pour la mise en oeuvre du matériau thermoplastique de l'invention. Les caractéristiques du polymère polyamide dans cette composition sont les mêmes, avec Tf, Tg, Tf-Tc et Delta Hc comme définies déjà ci-haut que celles du polymère final.

Les polyamides selon b) sont obtenus par réaction classique de polycondensation à partir des composants monomères qui sont des diamines, diacides et éventuellement des aminoacides ou lactames, notamment dans le cadre de substitution des monomères.

Dans un mode de réalisation avantageux, la présente invention concerne une composition telle que définie ci-dessus, caractérisée en ce que ladite composition de polyamide est une composition réactive de prépolymère selon a) et précurseur dudit polymère polyamide de ladite matrice du matériau thermoplastique.

Selon la composition réactive a), on peut distinguer trois possibilités détaillées ci-après : Avantageusement, ladite composition a) comprend ou est constituée d'au moins un prépolymère réactif porteur sur la même chaîne de deux fonctions terminales X' et Y', fonctions respectivement coréactives entre elles par condensation, avec X' et Y' étant amine et carboxyle ou carboxyle et amine respectivement.

Le prépolymère est un polyamide réactif porteur sur la même chaîne (c'est-à-dire sur le même prépolymère) de deux fonctions terminales X' et Y' fonctions respectivement coréactives entre elles par condensation.

Cette réaction de condensation (ou de polycondensation) peut provoquer l'élimination de sous-produits. Ceux-ci peuvent être éliminés en travaillant de préférence selon un procédé utilisant une technologie de moule ouvert. Dans le cas d'un procédé en moule fermé, une étape de dégazage, de préférence sous vide, des sous-produits éliminés par la réaction est présente, ceci afin d'éviter la formation de microbulles des sous-produits dans le matériau thermoplastique final, qui (microbulles) peuvent affecter les performances mécaniques dudit matériau si elles ne sont pas éliminées ainsi.

Le terme « réactif » signifie donc que la Mn du prépolymère évolue de plus de 50% après réaction sur lui-même ou avec un autre prépolymère ou encore par allongement de chaîne.

Après condensation, les caractéristiques du polymère polyamide final obtenu dans cette composition sont les mêmes, avec Tf, Tg, Tf-Tc et Delta Hc comme définies déjà ci-haut.

Avantageusement, ladite composition réactive a) comprend au moins deux prépolymères polyamides réactifs entre eux et porteurs chacun respectivement de deux fonctions terminales identiques X' ou Y', ladite fonction X' d'un prépolymère pouvant réagir seulement avec ladite fonction Y' de l'autre prépolymère, en particulier par condensation, plus particulièrement avec X' et Y' étant amine et carboxyle ou carboxyle et amine respectivement.

De la même manière, cette réaction de condensation (ou de polycondensation) peut provoquer l'élimination de sous-produits qui peuvent être éliminés comme ci-dessus défini.

Après condensation, les caractéristiques du polymère polyamide final obtenu dans cette composition sont les mêmes, avec Tf, Tg, Tf-Tc et Delta Hc comme définies déjà ci-haut.

Avantageusement, ladite composition a) ou composition précurseur, comprend ou est constituée de :
a1) au moins un prépolymère dudit polymère polyamide thermoplastique, porteur de n fonctions réactives terminales X', choisies parmi : -NH₂, -CO₂H et -OH, de préférence NH₂ et -CO₂H avec n étant 1 à 3, de préférence de 1 à 2, plus préférentiellement 1 ou 2, plus particulièrement 2
a2) au moins un allongeur de chaîne Y-A'-Y, avec A' étant un biradical hydrocarboné, de structure non polymérique, porteur de 2 fonctions réactives terminales Y identiques, réactives par polyaddition avec au moins une fonction X' dudit prépolymère a1), de préférence de masse moléculaire inférieure à 500, plus préférentiellement inférieure à 400.

Comme exemples convenables d'allongeurs a2) en fonction des fonctions X' portées par ledit prépolymère polyamide semi-cristallin a1), on peut citer les suivants :
- lorsque X' est NH₂ ou OH, de préférence NH₂ :
   ∘ soit l'allongeur de chaîne Y-A'-Y correspond à
      ▪ Y choisi parmi les groupements : maléimide, isocyanate éventuellement bloqué, oxazinone, oxazolinone et epoxy,
         et
      ▪ A' est un espaceur hydrocarboné comprenant optionnellement un ou plusieurs hétéroatomes, et reliant les fonctions Y entre elles, en particulier A' est un espaceur hydrocarboné ou un radical carboné portant les fonctions ou groupements réactifs Y, choisi parmi :
         - une liaison covalente entre deux fonctions (groupements) Y dans le cas où Y = oxazinone et oxazolinone ou
         - une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant éventuellement un poids moléculaire de 14 à 400 g.mol⁻¹
   ∘ soit l'allongeur de chaîne Y-A'-Y correspond à Y étant un groupement caprolactame et à A' pouvant être un radical carbonyle tel que le carbonyl biscaprolactame ou à A' pouvant être un téréphtaloyle ou un isophtaloyle,
   ∘ soit ledit allongeur de chaîne Y-A'-Y porte un groupement Y d'anhydride cyclique et de préférence cet allongeur est choisi parmi un dianhydride carboxylique cycloaliphatique et/ou aromatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges et
- lorsque X' est COOH :
   ∘ ledit allongeur de chaîne Y-A'-Y correspond à :
   ▪ Y choisi parmi les groupements : epoxy, oxazoline, oxazine, imidazoline ou aziridine, comme le 1, 1'-iso- ou téré- phtaloyl-bis (2-methyl aziridine)
   ▪ A' étant un espaceur (radical) carboné tel que défini ci-dessus.

Plus particulièrement, quand dans ledit allongeur Y-A'-Y, ladite fonction Y est choisie parmi oxazinone, oxazolinone, oxazine, oxazoline ou imidazoline, dans ce cas, dans l'allongeurde chaîne représenté par Y-A'-Y, A' peut représenter un alkylène tel que -(CH₂)ₘ- avec m allant de 1 à 14 et de préférence de 2 à 10 ou A' peut représenter un cycloalkylène et/ou un arylène substitué (alkyle) ou non substitué, comme les arylènes benzéniques, tels que les phénylènes o-, m-, -p ou les arylènes naphtaléniques et de préférence A' est un arylène et/ou un cycloalkylène.

Dans le cas du carbonyl- ou térephtaloyl- ou isophtaloyl- biscaprolactame comme allongeur de chaîne Y-A'-Y, les conditions préférées évitent l'élimination de sous-produit, comme le caprolactame lors de ladite polymérisation et mise en oeuvre à l'état fondu.

Dans le cas éventuel cité ci-haut où Y représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère P(X')n où X' = NH₂, les conditions préférées évitent toute formation de cycle imide lors de la polymérisation et lors la mise en oeuvre à l'état fondu.

Comme exemples d'allongeurs de chaîne à fonction réactive Y = epoxy qui conviennent qui conviennent à la mise en oeuvre de l'invention, on peut citer les diépoxydes aliphatiques, cycloaliphatiques ou aromatiques éventuellement substitués. Comme exemples de diépoxydes aliphatiques, on peut citer des diglycidyl éthers de diols aliphatiques, comme diépoxydes aromatiques des diglycidyl éthers de bisphénol A tel que le diglycidyl éther de bisphénol A (DGEBA) et comme diépoxydes cycloaliphatiques, des diglycidyl éthers de diols cycloaliphatiques ou du bisphénol A hydrogéné. De manière plus générale, comme exemples convenables de diépoxydes selon l'invention, on peut citer les bisphenol A diglycidyl éther (DGEBA) et son dérivé hydrogéné (cycloaliphatique), bisphénol F diglycidyl éther, le tétrabromo bisphénol A diglycidyl éther ou les hydroquinone diglycidyl éther, éthylène glycol diglycidyl éther, propylène glycol diglycidyl éther, butylène glycol diglycidyl éther, néopentyl glycol diglycidyl éther, 1,4-butanediol diglycidyl éther, 1,6-hexanediol diglycidyl éther, cyclohexanediméthanol diglycidyl éther, polyéthylène glycol diglycidyl éther de Mn < 500, polypropylène glycol diglycidyl éther de Mn < 500, polytétraméthylène glycol diglycidyl éther de Mn < 500, résorcinol diglycidyl éther, néopentylglycol diglycidyl éther, bisphenol A polyéthylène glycol diglycidyl éther de Mn <500, bisphénol A polypropylèneglycol diglycidyl éther de Mn < 500, diglycidyl esters de diacide carboxylique tel que le glycidyl ester d'acide téréphtalique ou les dioléfines (diènes) époxydées ou acides gras à double insaturation éthylénique époxydée, le diglycidyl 1,2 cyclohexane dicarboxylate et les mélanges des diépoxydes cités.

Comme exemples d'allongeurs de chaîne portant des fonctions réactives Y oxazoline ou oxazine convenables à la mise en oeuvre de l'invention, on pourra se référer à ceux décrits sous références « A », « B », « C » et « D » à la page 7 de la demande EP 0 581 642, ainsi qu'à leurs procédés de préparation et leurs modes de réaction qui y sont exposés. « A » dans ce document est la bisoxazoline, « B » la bisoxazine, « C » la 1,3 phénylène bisoxazoline et « D » la 1,4-phénylène bisoxazoline.

Comme exemples d'allongeurs de chaîne à fonction réactive Y imidazoline convenables à la mise en œuvre de l'invention, on pourra se référer à ceux décrits (« A » à « F ») à la page 7 à 8 et tableau 1 de la page 10 dans la demande EP 0 739 924 ainsi qu'à leurs procédés de préparation et leurs modes de réaction qui y sont exposés.

Comme exemples d'allongeurs de chaîne à fonction réactive Y = oxazinone ou oxazolinone qui conviennent à la mise en œuvre de l'invention, on peut se référer à ceux décrits sous références « A » à « D » à la page 7 à 8 de la demande EP 0 581 641, ainsi qu'à leurs procédés de préparation et leurs modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A' pouvant être une simple liaison covalente avec pour allongeurs correspondants respectifs étant : bis-(benzoxazinone), bisoxazinone et bisoxazolinone. A' peut être également un alkylène en C₁ à C₁₄, de préférence en C₂ à C₁₀ mais de préférence A' est un arylène et plus particulièrement il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Pour les fonctions Y comme oxazine (cycle à 6), oxazoline (cycle à 5) et imidazoline (cycle à 5), le radical A' peut être comme décrit ci-haut avec A' pouvant être une simple liaison covalente et avec les allongeurs correspondants respectifs étant : bisoxazine, bisoxazoline et bisimidazoline. A' peut être également un alkylène en C₁ à C₁₄, de préférence en C₂ à C₁₀. Le radical A' est de préférence un arylène et, plus particulièrement, il peut être un phénylène (substitué par Y en positions 1,2 ou 1,3 ou 1,4) ou un radical naphtalène (disubstitué par Y) ou un phtaloyle (iso- ou téréphtaloyle) ou A' peut être un cycloalkylène.

Dans le cas où Y = aziridine (hétérocycle azoté à 3 atomes équivalent à l'oxyde d'éthylène en remplaçant l'éther -O- par -NH-), le radical A' peut être un phtaloyle (1,1'iso- ou téré- phtaloyle) avec comme exemple d'allongeur de ce type, la 1, 1' isophtaloyl-bis(2-méthyl aziridine).

La présence d'un catalyseur de la réaction entre ledit prépolymère P(X')n et ledit allongeur Y-A'-Y à un taux allant de 0,001 à 2%, de préférence de 0,01 à 0,5% par rapport au poids total de deux co-réactants cités peut accélérer la réaction de (poly)addition et ainsi raccourcir le cycle de production.

Selon un cas plus particulier du choix dudit allongeur, A' peut représenter un alkylène, tel que -(CH₂)ₘ- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A' représente un arylène qui peut être benzénique ou naphténique substitué ou non.

Comme déjà précisé, ledit allongeur de chaîne (a2) a une structure non polymérique et de préférence une masse moléculaire inférieure ou égale à 500, plus préférentiellement inférieure ou égale à 400.

Lesdits prépolymères réactifs de ladite composition réactive a), selon les trois options citées plus haut, ont une masse moléculaire moyenne en nombre Mn allant de préférence de 500 à 20000, notamment de 500 à 10000, en particulier 1000 à 6000. Toutes les masses Mn sont déterminées par potentiométrie ou par RMN (Postma et al. (Polymer, 47, 1899-1911 (2006)).

Dans le cas des compositions réactives de l'invention selon définition a), lesdits prépolymères réactifs sont préparés par réaction classique de polycondensation entre les composants diamines et diacides correspondants et éventuellement (en fonction des substitutions) aminoacides ou lactames. Les prépolymères portant des fonctions X' et Y' amine et carboxyle sur la même chaîne peuvent être obtenus par exemple en ajoutant une combinaison de monomères (aminoacide, diamine, diacide) présentant au total une quantité égale de motifs amine et carboxyle, mais en ne conduisant pas la réaction jusqu'à conversion totale. Une autre voie d'obtention de ces prépolymères porteurs d'une fonction X' et une Y' est, par exemple, en associant un prépolymère portant 2 fonctions identiques X' = amine, avec un prépolymère diacide porteur de Y' : carboxyle, avec un taux molaire global en fonctions acides égal à celui des fonctions amines X' de départ.

Pour l'obtention de prépolymères fonctionnalisés avec des fonctions identiques (aminés ou carboxyle) sur la même chaîne, il suffit d'avoir un excès de diamine (ou de fonctions amines globalement) pour avoir des fonctions terminales amines ou excès de diacide (ou de fonctions carboxyle globalement) pour avoir des fonctions terminales carboxyles.

Dans le cas d'un prépolymère P(X')n avec n fonctions X' identiques, la fonctionnalité 1 peut être obtenue en présence d'un composant monofonctionnel bloquant (monoacide ou monoamine en fonction de la nature de X' = amine ou carboxyle).

Une fonctionnalité n = 2 peut être obtenue à partir de composants difonctionnels : diamines et diacides avec excès de l'un pour fixer X' en fonction de cet excès.

Pour n = 3 par exemple, pour un prépolymère P(X')n, il faut la présence d'un composant trifonctionnel, par exemple présence d'une triamine (une mole par chaîne de prépolymère) avec une diamine dans la réaction avec un diacide. La fonctionnalité préférée pour P(X')n est n = 2.

Dans un mode de réalisation avantageux, la présente invention concerne une composition telle que définie ci-dessus, ladite composition a) ou composition précurseur, comprenant ou étant constituée de :
a1) au moins un prépolymère dudit polymère polyamide thermoplastique, porteur de n fonctions réactives terminales X', et
a2) au moins un allongeur de chaîne Y-A'-Y, dans laquelle X' est NH₂ ou OH, en particulier NH₂ et Y est choisi parmi un anhydride, en particulier le dianhydride 3,3',4,4'-benzophénone tétracarboxylique, une oxazinone, une oxazolinone et un époxy

Dans un mode de réalisation avantageux, la présente invention concerne une composition telle que définie ci-dessus, ladite composition a) ou composition précurseur, comprenant ou étant constituée de :
a1) au moins un prépolymère dudit polymère polyamide thermoplastique, porteur de n fonctions réactives terminales X', et
a2) au moins un allongeur de chaîne Y-A'-Y, dans laquelle X' est CO₂H et Y est choisi parmi un epoxy et une oxazoline.

Avantageusement, X' est CO₂H et Y-A'-Y est choisi parmi les phénylènes bis oxazolines, de préférence la 1,3 - phénylène-bis(2-oxazoline) ou la 1,4-phénylène-bis(2-oxazoline) (PBO).

Dans un mode de réalisation avantageux, la présente invention concerne une composition telle que définie ci-dessus, caractérisée en ce que caractérisée en ce que elle comprend a1) au moins un prépolymère aminé (porteur de -NH2), dudit polymère thermoplastique de la matrice, en particulier avec au moins 50% et plus particulièrement avec 100% des groupements terminaux dudit prépolymère a1) étant des fonctions d'amine primaire -NH2 et a2) au moins un allongeur de chaîne, non polymérique et porteur d'un groupement anhydride carboxylique cyclique, de préférence porté par un cycle aromatique, ayant comme substituant un groupement comprenant une insaturation éthylénique ou acétylénique, de préférence acétylénique, ledit groupement anhydride carboxylique pouvant être sous forme acide, ester, amide ou imide avec ledit allongeur a2) étant présent à un taux correspondant à un rapport molaire a2)/(-NH2) inférieur à 0,36, de préférence allant de 0,1 à 0,35, plus préférentiellement allant de 0,15 à 0,35 et encore plus préférentiellement allant de 0,15 à 0,31 et en ce que ledit polymère thermoplastique de la matrice est le produit de la réaction de polymérisation par allongement dudit prépolymère a1) par ledit allongeur a2).

Ladite réaction par le choix des composants a1) et a2) et de leur rapport molaire spécifique conduit à un polymère final thermoplastique qui n'est pas réticulé.

Ledit prépolymère a1) est porteur de groupements amine primaire représenté par-NH2. Plus particulièrement, il faut noter que le nombre moyen de groupements amine primaire par molécule de prépolymère a1), autrement dit la fonctionnalité moyenne en groupements amine primaire, peut varier de 1 à 3 et de préférence de 1 à 2. En particulier, la fonctionnalité dudit prépolymère a1) d'au moins 50% des groupements terminaux dudit prépolymère a1) étant des fonctions d'amine primaire -NH2, cela signifie qu'il est possible qu'une partie soit des groupements carboxyle ou des bouts de chaîne bloqués sans groupement réactif et dans ce cas, la fonctionnalité moyenne en -NH2 peut ainsi varier de 1 à 3 et de préférence de 1 à 2.

Le terme « thermoplastique » dans le cas de la présente invention signifie que le polymère résultant de la réaction du prépolymère a1) et de l'allongeur a2) est essentiellement thermoplastique, ce qui veut dire qu'il contient moins de 15% de son poids, de préférence moins de 10% de son poids et plus préférentiellement moins de 5% de son poids et encore plus préférentiellement 0% de son poids (à 0,5% près ou à 1% près) de polymères réticulés qui sont insolubles ou infusibles.

Ledit allongeur a2) peut être choisi parmi :
- les anhydrides et dérivés d'anhydride sous forme acide, ester, amide ou imide des éthynyl o-phtalique, méthyl éthynyl o-phtalique, phényl éthynyl o-phtalique, naphtyl éthynyl o-phtalique, 4-(o-phtaloyl éthynyl) o-phtalique ou le 4-(phényl éthynyl cétone) o-phtalique, ce dernier étant aussi appelé 4-(phényl éthynyl) trimellitique,
- les acides ou esters ou amides des acides éthynyl isophtalique, méthyl éthynyl isophtalique, phényl éthynyl isophtalique, naphtyl éthynyl isophtalique, 4-(o-phtaloyl éthynyl) isophtalique, 4-(phényl éthynyl cétone) isophtalique, éthynyl téréphtalique, méthyl éthynyl téréphtalique, phényl éthynyl téréphtalique, naphtyl éthynyl téréphtalique, 4-(o-phtaloyl éthynyl) téréphtalique, éthynyl benzoïque, méthyl éthynyl benzoïque, phényl éthynyl benzoïque, naphtyl éthynyl benzoïque, 4-(o-phtaloyl éthynyl) benzoïque.

Avantageusement, ledit allongeur a2) est choisi parmi les composés anhydrides aromatiques, de préférence o-phtaliques, substitués en position 4 du cycle aromatique par un substituant défini par un groupement R-C=C-(R')x- avec R étant un alkyl en C1-C2 ou H ou aryle, en particulier phényle ou R est le résidu d'un anhydride carboxylique aromatique, de préférence o-phtalique, lié à la triple liaison acétylénique par le carbone en position 4 du cycle aromatique et x étant égal à 0 ou à 1 et pour x étant égal à 1, R' étant un groupement carbonyle.

Avantageusement, ledit allongeur a2) est choisi parmi les composés anhydrides aromatiques o-phtaliques porteurs en position 4 d'un groupement substituant choisi parmi méthyl éthynyle, phényl éthynyle, 4-(o-phtaloyle) éthynyle, phényl éthynyl cétone aussi appelé anhydride phényl éthynyl trimellitique et de préférence porteurs en position 4 d'un groupement substituant choisi parmi méthyl éthynyle et phényl éthynyl cétone.

Avantageusement, ledit allongeur a2), tel que défini ci-dessus et quelle que soit sa structure, a un poids moléculaire inférieur ou égal à 500, de préférence inférieur ou égal à 400.

Avantageusement, le taux dudit allongeur a2), tel que défini ci-dessus et quelle que soit sa structure, dans le dit polymère polyamide varie de 1 à 20%, en particulier de 5 à 20%.

Dans un mode de réalisation avantageux, la présente invention concerne une composition telle que définie ci-dessus, caractérisée en ce qu'il s'agit d'une composition de moulage.

Selon un autre aspect, la présente invention concerne un procédé de fabrication d'un matériau thermoplastique, en particulier d'une pièce mécanique ou d'une pièce de structure à base dudit matériau, de composition telle que définie ci-dessus, caractérisé en ce qu'il comprend au moins une étape de polymérisation d'au moins une composition réactive a) telle que définie ci-haut selon l'invention ou une étape de moulage ou de mise en œuvre d'au moins une composition non réactive b) telle que définie ci-dessus, par extrusion, injection ou moulage.

Dans un mode de réalisation avantageux, la présente invention concerne un procédé de fabrication d'un matériau thermoplastique tel que défini ci-dessus, caractérisé en ce qu'il comprend les étapes suivantes :
i) injection d'une composition telle que définie ci-dessus, optionnellement dépourvue de renfort fibreux, dans un moule ouvert ou fermé ou hors moule,
ii) réaction de polymérisation dans le cas d'une composition réactive a) de polyamide telle que définie ci-dessus, par chauffage de ladite composition de l'étape i) avec allongement de chaîne, suivant le cas, par réaction de polycondensation ou par réaction de polyaddition, en masse à l'état fondu, avec optionnellement dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule,
iii) une mise en oeuvre ou moulage de ladite composition de l'étape i) dans le cas d'une composition de polyamide non réactive b) pour former la pièce finale dans un moule ou avec un autre système de mise en oeuvre et, dans le cas d'une composition réactive a), une étape de mise en oeuvre par moulage ou par un autre système de mise en oeuvre et simultanément avec l'étape ii) de polymérisation.

Selon un autre aspect, la présente invention concerne un polymère polyamide semi-cristallin, caractérisé en ce qu'il correspond au (ou est le) polymère de la matrice thermoplastique dudit matériau thermoplastique, tel que défini ci-dessus, ledit polymère étant un polymère non réactif tel que défini selon ladite composition b) ou un polymère susceptible d'être obtenu à partir d'une composition réactive telle que définie selon ladite composition a).

Ce polymère thermoplastique est par définition un des composants essentiels de la composition du matériau thermoplastique de la présente invention et fait donc partie de l'invention comme produit lié à la présente invention avec le même concept inventif commun face au même problème technique à résoudre. L'invention couvre donc également l'utilisation dudit polymère thermoplastique selon l'invention en tant que matrice thermoplastique d'un matériau thermoplastique à base d'un renfort fibreux comme décrit ci-haut.

Selon encore un autre aspect, la présente invention concerne l'utilisation d'une composition telle que définie ci-dessus ou d'un polymère non réactif tel que défini selon ladite composition b) ou un polymère susceptible d'être obtenu à partir d'une composition réactive telle que définie selon ladite composition a), pour la fabrication de pièces mécaniques ou de structure, à base dudit matériau thermoplastique, de tuyau monocouche ou multicouche, ou de film

Dans un mode de réalisation avantageux, la présente invention concerne l'utilisation telle que définie ci-dessus, caractérisée en ce que lesdites pièces mécaniques ou de structure dudit matériau thermoplastique concernent des applications dans le domaine de l'automobile, ferroviaire, marin (maritime), de l'éolien, photovoltaïque, solaire, y compris panneaux solaires et composants de centrales solaires, du sport, aéronautique et spatial, transport routier (concernant les camions), du bâtiment, génie civil, des panneaux et des loisirs.

Dans un autre mode de réalisation avantageux, la présente invention concerne l'utilisation telle que définie ci-dessus, caractérisée en ce que lesdites pièces mécanique pour des applications dans l'automobile sont des pièces sous capot moteur pour le transport de fluide, notamment dans des dispositifs d'admission d'air, de refroidissement (par exemple par air, liquide de refroidissement,...), de transport ou transfert de carburants ou de fluides, notamment huile, eau,...

Dans un encore un autre mode de réalisation avantageux, la présente invention concerne l'utilisation telle que définie ci-dessus, caractérisée en ce que lesdites pièces mécaniques ou de structure pour des applications dans l'électrique ou l'électronique sont des biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias.

### Méthodes de détermination des caractéristiques citées

- La mesure de la viscosité intrinsèque ou inhérente est réalisée dans le m-crésol. La méthode est bien connue de l'homme du métier. On suit la norme ISO 307 :2007 mais en changeant le solvant (utilisation du m-crésol à la place de l'acide sulfurique et la température étant de 20°C).
- La température de transition vitreuse Tg est mesurée à l'aide d'un calorimètre différentiel à balayage (DSC), après un deuxième passage en chauffe, suivant la norme ISO 11357-2 :2013. La vitesse de chauffage et de refroidissement est de 20°C/min.
- La température de fusion Tf et la température de cristallisation Tc sont mesurées par DSC, selon la norme ISO 11357-3 :2013. La vitesse de chauffage et de refroidissement est de 20°C/min.
- L'enthalpie de cristallisation dudit polymère de matrice est mesurée en Calorimétrie Différentielle à Balayage (DSC) selon la norme ISO 11357-3 :2013.

### Exemples

### A - Préparation d'un polymère polyamide par voie directe (sans allongement de chaîne)

Le mode opératoire suivant est un exemple de procédé de préparation, et n'est pas limitatif. Il est représentatif de toutes les compositions selon l'invention :
Dans un réacteur autoclave de 14 litres, on introduit 5 kg des matières premières suivantes :
- 500 g d'eau,
- les diamines,
- l'aminoacide (éventuellement),
- l'acide térépthalique et éventuellement un ou des autres diacides,
- le régulateur de chaîne monofonctionnel : acide benzoïque en quantité adaptée à la Mn visée et variant (acide benzoïque) de 50 à 100 g,
- 35 g d'hypophosphite de sodium en solution,
- 0,1 g d'un antimousse WACKER AK1000 (société Wacker Silicones).

La nature et rapports molaires des motifs et structures moléculaires des polyamides (par essai référencé) sont donnés au tableau III ci-dessous.

Le réacteurfermé est purgé de son oxygène résiduel puis chauffé à une température de 230°C par rapport à la matière introduite. Après 30 minutes d'agitation dans ces conditions, la vapeur sous pression qui s'est formée dans le réacteur est détendue progressivement en 60 minutes, tout en augmentant progressivement la température matière de manière à ce qu'elle s'établisse à Tf + 10°C à pression atmosphérique.

La polymérisation est ensuite poursuivie sous balayage d'azote de 20 l/h jusqu'à obtention d'un polymère visqueux.

Le polymère est ensuite vidangé par la vanne de fond puis refroidi dans un bac d'eau puis mis sous forme de granulés.

Les résultats sont présentés dans les tableaux III et IV suivants. Ceux-ci ont été obtenus à partir de 1,3 BAC présentant un ratio cis/trans de 75/25 mol%.

**TABLEAU III**

| **Réf** | **10T** | **BACT** | **Tf** | **Tc** | **Tf-Tc** | **DeltaHc** | **Tg** |
|---|---|---|---|---|---|---|---|
| | **mol%** | **mol%** | **°C** | **°C** | **°C** | **J/g** | **°C** |
| C 10T* | 100,0 | 0,0 | **3**14 | 279 | 35 | 63 | 120 |
| I1 | 16,7 | 83,3 | 314,9 | 291,2 | 23,7 | 58,3 | 176,1 |
| C BACT* | 0,0 | 100,0 | 349 | - | - | - | 187 |

| | | | | | | | |
|---|---|---|---|---|---|---|---|
| C désigne Comparatif I désigne Invention * Selon JP2015017177 | | | | | | | |

Les résultats du Tableau III montrent que pour une fraction molaire de BACT de plus de 70% à 99,1 mol%, la température de fusion est comprise de 290°C à 340°C.

Dans le même temps, la Tg est très élevée et peut être modulée de 155°C (non indiquée sur le tableau) à environ 190°C.

**TABLEAU IV**

| Réf. | Type essai | Structure moléculaire / Composition molaire | Tf | Tc | Tf-Tc | DeltaHc | Tg | Visco sité inhér ente |
|---|---|---|---|---|---|---|---|---|
| | | | °C | °C | °C | J/g | °C | |
| C1 | Comparatif, (EP1988113) | 10T/6T (59/41) | **281** | 236 | **45** | 44 | **122** | 1,12 |
| C2 | Comparatif, (EP1988113) | 10T/6T/11 (60/24/16) | **269** | 220 | **49** | **39** | **111** | 1,25 |
| C3 | Comparatif, (WO2011/003 93) | 10T/TMDT (59/41) | **263** | 197 | **66** | **35** | **133** | 1,15 |
| C10 T | Comparatif | 10T (100) | 314 | 279 | 35 | 63 | **120** | insol uble |
| C4 | Comparatif | 10T/11 (67/33) | **269** | 232 | 37 | 50 | **84** | 1,19 |
| C5 | Comparatif | 10,T/11 (59/41) | **261** | 213 | **48** | **39** | **78** | 1,15 |
| C6 | Comparatif | 10T/10I (67/33) | **269** | 205 | **64** | **32** | **110** | 1,12 |
| C7 | Comparatif | MXDT/11 (59/41) | **211** | (*) | **> 100** | **12** | **111** | 1,25 |
| C8 | Comparatif | MPMDT/11 (59/41) | - | (*) | - | - | **84** | 1,14 |
| C9 | Comparatif | 10T/MXDT (50/50) | **262** | 211 | **51** | **17** | **137** | 0,99 |
| C10 | Comparatif | 10T/MPMDT (59/41) | **264** | 219 | **45** | 40 | **126** | 1,11 |
| C11 | Comparatif | 10T/MPMDT (50/50) | **245** | 185 | **60** | **22** | **127** | 1,12 |
| C12 | Comparatif | 10T/12T/11 (60/24/16) | **271** | 246 | 25 | 56 | **105** | 0,98 |
| C13 | Comparatif | 18T/MXDT (71/29) | **264** | 242 | 22 | 47 | **95** | 0,86 |
| C14 | Comparatif | 1,3BACT/10T (60/40) | **275,6** | 241,7 | 33,9 | 60,8 | **134,0** | 0,92 |
| C15 | Comparatif | 1,3BACT/10T (60/40) | **281,7** | 248,3 | 33,4 | 53,5 | 153,4 | 1,05 |
| C16 | Comparatif | 1,3BACT/10T (45/55) | **279,4** | 242,5 | 36,9 | 55,5 | **146,0** | 0,93 |
| C17 | Comparatif | 1,3BACT/10T (45/55) | **279,8** | 252,0 | 27,8 | 62,2 | **142,7** | 0,87 |
| C18 | Comparatif | 1,3BACT/10T (40/60) | **282,0** | 253,5 | 28,5 | 49,7 | 160,2 | 1,09 |
| C19 | Comparatif | 1,3BACT/10T (40/60) | **286,1** | 250,4 | 35,7 | 57,0 | 163,9 | 0,94 |

| | | | | | | | | |
|---|---|---|---|---|---|---|---|---|
| (*) : Pas de cristallisation au refroidissement. | | | | | | | | |

Les résultats du tableau IV montrent que la substitution totale de la BAC ou du motif 10T ou une proportion de 10T supérieure ou égale à 30% conduit à des compositions ne présentant pas au moins une des valeurs de Tf, Tg, Tf-Tc et delta Hc requises.

## Revendications

1. Composition pour matériau thermoplastique comprenant :
- 0 à 70% en poids, préférentiellement 20 à 60% en poids, de fibres de renfort courtes de longueur comprise entre 200 et 400 µm,
- 30 à 100% en poids, préférentiellement 40 à 80% en poids, d'une matrice thermoplastique à base d'au moins un polymère polyamide semi-cristallin,
- 0 à 50% d'additifs et/ou autres polymères,
ladite composition étant:
a) une composition réactive comprenant ou constitué de, au moins un prépolymère polyamide réactif précurseur dudit polymère polyamide semi-cristallin,
ou en alternative à a),
b) une composition non réactive d'au moins un polymère polyamide, ladite composition étant celle de ladite matrice thermoplastique définie ci-dessus, et ledit prépolymère polyamide réactif de la composition a) et ledit polymère polyamide de la composition b) comprenant ou étant constitués d'au moins un copolyamide BACT/XT dans lequel :
- BACT est une unité à motif amide présente à un taux molaire allant de plus de 70% à 99,1%, de préférence de 80 à 99%, plus préférentiellement de 90 à 99%, où BAC est choisi parmi la 1,3-bis (aminométhyle) cyclohexyle (1,3 BAC), la 1,4-bis (aminométhyle) cyclohexyle (1,4 BAC) et un mélange de ceux-ci, et T est l'acide téréphtalique,
- XT est une unité à motif amide présente à un taux molaire allant de 0,9 à moins de 30%, de préférence de 1 à 20%, plus préférentiellement de 1 à 10%, où X est une diamine aliphatique linéaire en C9 à C18, de préférence en C9, C10, C11 et C12, et où T est l'acide téréphtalique, préférentiellement en C10, C11 et C12.
- dans les unités BACT et/ou XT, indépendamment l'une de l'autre, jusqu'à 30% en mole, de préférence 20% en mole, en particulier jusqu'à 10% en mole, par rapport à la quantité totale des diacides carboxyliques, de l'acide téréphtalique peut être remplacé par d'autres diacides carboxyliques aromatiques, aliphatiques ou cycloaliphatiques comprenant 6 à 36 atomes de carbone, en particulier 6 à 14 atomes de carbone, et
- dans les unités BACT et/ou XT, indépendamment l'une de l'autre, jusqu'à 30% en mole, de préférence 20% en mole, en particulier jusqu'à 10% en mole, de la BAC et/ou selon le cas de X, par rapport à la quantité totale des diamines, peut être remplacée par d'autres diamines comprenant de 4 à 36 atomes de carbone, en particulier 6 à 12 atomes de carbone, et
- dans le copolyamide, pas plus de 30% en mole, de préférence pas plus de 20%, de préférence pas plus de 10% en mole, par rapport à la quantité totale des monomères, peut être formée par des lactames ou des acides aminocarboxyliques, et
- à condition que la somme des monomères qui remplacent l'acide téréphtalique, la BAC et X ne dépasse pas une concentration de 30% en mole, de préférence 20% en mole, de préférence 10% en mole, par rapport à la quantité totale des monomères utilisés dans le copolyamide, et
- à condition que des unités BACT et XT soient toujours présentes dans ledit polymère polyamide.

2. Composition selon la revendication 1, dans laquelle ledit polymère polyamide semi-cristallin présente une température de fusion Tf comprise de 290°C à 340°C, de préférence comprise de 300°C à 330°C, plus préférentiellement comprise de 310°C à 330°C, telle que déterminée selon la norme ISO 11357-3 (2013).

3. Composition selon la revendication 1 ou 2, dans laquelle ledit polymère polyamide semi-cristallin présente une température de transition vitreuse Tg > 150°C, de préférence > 160°C, plus préférentiellement > 170°C, déterminée selon la norme ISO 11357-2 :2013.

4. Composition selon l'une des revendications 1 à 3, dans laquelle ledit polymère polyamide semi-cristallin présente un écart entre la température de fusion et la température de cristallisation Tf -Tc < 40°C, préférentiellement < 30°C, déterminé selon la norme ISO 11357-3 :2013.

5. Composition selon l'une des revendications 1 à 4, **caractérisée en ce que** l'enthalpie de cristallisation du polymère polyamide semi-cristallin, mesurée en Calorimétrie Différentielle à Balayage (DSC) selon la Norme ISO 11357-3 :2013, est supérieure à 40 J/g, de préférence supérieure à 45 J/g, plus préférentiellement supérieure à 50 J/g.

6. Composition selon l'une des revendications 1 à 5, **caractérisée en ce que** la BAC est la 1,3 BAC.

7. Composition selon l'une des revendications 1 à 6, **caractérisée en ce que** la BAC est la 1,3 BAC et XT est choisi parmi 9T, 10T, 11T et 12T, en particulier 10T, 11T et 12T.

8. Composition selon l'une des revendications 1 à 7, **caractérisée en ce que** XT est 10T, 10 correspondant à la 1,10 décanediamine.

9. Composition selon l'une des revendications 1 à 8, **caractérisée en ce que** la somme des monomères qui remplacent l'acide téréphtalique, la BAC et X est égale à 0.

10. Composition selon l'une des revendications 1 à 9, **caractérisée en ce que** ladite composition est une composition non réactive selon b).

11. Composition selon l'une des revendications 1 à 9, **caractérisée en ce que** ladite composition de polyamide est une composition réactive de prépolymère selon a) et précurseur dudit polymère polyamide de ladite matrice du matériau thermoplastique.

12. Composition selon l'une des revendications 1 à 10, **caractérisée en ce qu'**elle comprend de plus au moins un additif.

13. Composition selon la revendication 12, **caractérisée en ce que** l'additif est choisi parmi un antioxydant, un stabilisant à la chaleur, un absorbeur d'UV, un stabilisant à la lumière, un modifiant choc, un lubrifiant, une charge inorganique, un agent ignifugeant, un agent nucléant et un colorant.

14. Composition selon l'une des revendications 1 à 13, **caractérisée en ce qu'**il s'agit d'une composition de moulage.

15. Procédé de fabrication d'un matériau thermoplastique, en particulier d'une pièce mécanique ou d'une pièce de structure à base dudit matériau, de composition telle que définie selon l'une des revendications 1 à 13, **caractérisé en ce qu'**il comprend au moins une étape de polymérisation d'au moins une composition réactive a) telle que définie selon la revendication 9, ou une étape de moulage ou de mise en oeuvre d'au moins une composition non réactive b) telle que définie selon la revendication 9, par extrusion, injection ou moulage.

16. Procédé selon la revendication 15, **caractérisé en ce qu'**il comprend les étapes suivantes :
i) injection d'une composition telle que définie selon l'une des revendications 1 à 13, optionnellement dépourvue de renfort fibreux, dans un moule ouvert ou fermé ou hors moule,
ii) réaction de polymérisation dans le cas d'une composition réactive a) de polyamide selon la revendication 11, par chauffage de ladite composition de l'étape i) avec allongement de chaîne, suivant le cas, par réaction de polycondensation ou par réaction de polyaddition, en masse à l'état fondu, avec optionnellement dans le cas de la polycondensation, une élimination sous vide des produits de condensation quand il s'agit d'un moule fermé, à l'aide d'un système d'extraction sous vide, sinon et de préférence avec la polycondensation étant réalisée en moule ouvert ou hors moule,
iii) une mise en oeuvre ou moulage de ladite composition de l'étape i) dans le cas d'une composition de polyamide non réactive b) pour former la pièce finale dans un moule ou avec un autre système de mise en oeuvre et, dans le cas d'une composition réactive a), une étape de mise en oeuvre par moulage ou par un autre système de mise en oeuvre et simultanément avec l'étape ii) de polymérisation.

17. Polymère polyamide semi-cristallin, **caractérisé en ce qu'**il correspond au (ou est le) polymère de la matrice thermoplastique dudit matériau thermoplastique, tel que défini selon l'une des revendications 1 à 13, ledit polymère étant un polymère non réactif tel que défini selon ladite composition b) ou un polymère susceptible d'être obtenu à partir d'une composition réactive telle que définie selon ladite composition a).

18. Utilisation d'une composition telle que définie selon l'une des revendications 1 à 13 ou d'un polymère non réactif tel que défini selon ladite composition b) ou un polymère susceptible d'être obtenu à partir d'une composition réactive telle que définie selon ladite composition a), pour la fabrication de pièces mécaniques ou de structure, à base dudit matériau thermoplastique, de tuyau monocouche ou multicouche, ou de film.

19. Utilisation selon la revendication 18, **caractérisée en ce que** lesdites pièces mécaniques ou de structure dudit matériau concernent des applications dans le domaine de l'automobile, de l'électrique ou l'électronique, ferroviaire, marin, de l'éolien, photovoltaïque, solaire, y compris panneaux solaires et composants de centrales solaires, du sport, aéronautique et spatial, transport routier (concernant les camions), du bâtiment, génie civil, des panneaux et des loisirs.

20. Utilisation selon la revendication 18, **caractérisée en ce que** lesdites pièces mécanique pour des applications dans l'automobile sont des pièces sous capot moteur pour le transport de fluide, notamment dans des dispositifs d'admission d'air, de refroidissement (par exemple par air, liquide de refroidissement), de transport ou transfert de carburants ou de fluides.

21. Utilisation selon la revendication 18, **caractérisée en ce que** lesdites pièces mécaniques ou de structure pour des applications dans l'électrique ou l'électronique sont des biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias.

22. Matériau thermoplastique **caractérisé en ce qu'**il résulte de l'utilisation d'au moins une composition pour matériau thermoplastique telle que définie selon l'une des revendications 1 à 13.

23. Pièce mécanique ou de structure de matériau thermoplastique, **caractérisée en ce qu'**elle résulte de l'utilisation d'au moins une composition telle que définie selon l'une des revendications 1 à 13 ou de l'utilisation d'un polymère polyamide tel que défini selon la revendication 17 ou qu'elle est à base d'un matériau tel que défini selon la revendication 22 ou qu'elle est obtenue par un procédé tel que défini selon l'une des revendications 15 ou 16.

24. Pièce selon la revendication 23, **caractérisée en ce qu'**il s'agit de pièces mécanique pour des applications dans l'automobile telles que des pièces sous capot moteur pour le transport de fluide, notamment dans des dispositifs d'admission d'air, de refroidissement (par exemple par air, liquide de refroidissement), de transport ou transfert de carburants ou de fluides (tels que huile, eau).

25. Pièce selon la revendication 23, **caractérisée en ce qu'**il s'agit de pièces mécaniques ou de structure pour des applications dans l'électrique ou l'électronique telles que des biens d'équipements électriques et électroniques, tels que solénoïdes encapsulés, pompes, téléphones, ordinateurs, imprimantes, télécopieurs, modems, moniteurs, télécommandes, caméras, disjoncteurs, gaines de câbles électriques, fibres optiques, interrupteurs, systèmes multimédias.

## Patentansprüche

1. Zusammensetzung für thermoplastisches Material, umfassend:
- 0 bis 70 Gewichts-%, vorzugsweise 20 bis 60 Gewichts-%, kurze Verstärkungsfasern mit einer Länge im Bereich zwischen 200 und 400 µm,
- 30 bis 100 Gewichts-%, vorzugsweise 40 bis 80 Gewichts-%, eine thermoplastische Matrix auf Basis mindestens eines teilkristallinen Polyamidpolymers,
- 0 bis 50 % Zusatzstoffe und/oder andere Polymere,
wobei die Zusammensetzung Folgendes ist:
a) eine reaktive Zusammensetzung, die mindestens einen reaktiven Polyamidprepolymer-Vorläufer des teilkristallinen Polyamidpolymers umfasst oder daraus besteht, oder alternativ zu a)
b) eine nicht-reaktive Zusammensetzung aus mindestens einem Polyamidpolymer, wobei die Zusammensetzung die der obenstehend definierten thermoplastischen Matrix ist,
und das reaktive Polyamidprepolymer der Zusammensetzung a) und das Polyamidpolymer der Zusammensetzung b) mindestens ein BACT/XT-Copolyamid umfassen oder daraus bestehen, wobei:
- BACT eine Amideinheit ist, die in einem molaren Verhältnis von mehr als 70 % bis 99,1 %, vorzugsweise von 80 % bis 99 %, mehr bevorzugt von 90 % bis 99 %, vorliegt, wobei BAC ausgewählt ist aus 1,3-Bis(aminomethyl)cyclohexyl (1,3-BAC), 1,4-Bis(aminomethyl)cyclohexyl (1,4-BAC) und einem Gemisch davon, und T Terephthalsäure ist,
- XT eine Amideinheit ist, die in einem Molverhältnis, das von 0,9 bis weniger als 30 %, vorzugsweise von 1 bis 20 %, mehr bevorzugt von 1 bis 10 % reicht, vorliegt, wobei X ein lineares aliphatisches Diamin von C9 bis C18, vorzugsweise von C9, C10, C11 und C12 ist und wobei T Terephthalsäure ist, vorzugsweise von C10, C11 und C12.
- in den BACT- und/oder XT-Einheiten unabhängig voneinander, bezogen auf die Gesamtmenge der Dicarbonsäuren, bis zu 30 Mol-%, vorzugsweise 20 Mol-%, insbesondere bis zu 10 Mol-% Terephthalsäure durch andere aromatische, aliphatische oder cycloaliphatische Dicarbonsäuren, umfassend 6 bis 36 Kohlenstoffatome, insbesondere 6 bis 14 Kohlenstoffatome, ersetzt sein kann, und
- in den BACT- und/oder XT-Einheiten unabhängig voneinander, bezogen auf die Gesamtmenge der Diamine, bis zu 30 Mol-%, vorzugsweise 20 Mol-%, insbesondere bis zu 10 Mol-% BAC und/oder, je nach Fall, X, durch andere Diamine, umfassend 4 bis 36 Kohlenstoffatome, insbesondere 6 bis 12 Kohlenstoffatome, ersetzt sein können, und
- in dem Copolyamid, bezogen auf die Gesamtmenge der Monomere, nicht mehr als 30 Mol-%, vorzugsweise nicht mehr als 20 Mol-%, vorzugsweise nicht mehr als 10 Mol-% durch Lactame oder Aminocarbonsäuren gebildet sein können, und
- unter der Voraussetzung, dass die Summe der Monomere, die die Terephthalsäure, das BAC und X ersetzen, bezogen auf die Gesamtmenge der in dem Copolyamid verwendeten Monomere eine Konzentration von 30 Mol-%, vorzugsweise 20 Mol-%, vorzugsweise 10 Mol-% nicht überschreitet, und
- unter der Voraussetzung, dass BACT- und XT-Einheiten in dem Polyamidpolymer immer vorhanden sind.

2. Zusammensetzung nach Anspruch 1, wobei das teilkristalline Polyamidpolymer eine Schmelztemperatur Tf im Bereich von 290 °C bis 340 °C, vorzugsweise im Bereich von 300 °C bis 330 °C, mehr bevorzugt im Bereich von 310 °C bis 330 °C, wie nach der Norm ISO 11357-3 (2013) bestimmt, aufweist.

3. Zusammensetzung nach Anspruch 1 oder 2, wobei das teilkristalline Polyamidpolymer eine Glasübergangstemperatur Tg von > 150 °C, vorzugsweise > 160 °C, mehr bevorzugt > 170 °C, bestimmt nach der Norm ISO 11357-2:2013, aufweist.

4. Zusammensetzung nach einem der Ansprüche 1 bis 3, wobei das teilkristalline Polyamidpolymer eine Differenz zwischen der Schmelztemperatur und der Kristallisationstemperatur Tf-Tc von < 40 °C, vorzugsweise < 30 °C, bestimmt nach der Norm ISO 11357-3:2013, aufweist.

5. Zusammensetzung nach einem der Ansprüche 1 bis 4, **dadurch gekennzeichnet, dass** die Kristallisationsenthalpie des teilkristallinen Polyamidpolymers, gemessen durch Dynamische Differenzkalorimetrie (DSC) nach der Norm ISO 11357-3:2013, größer als 40 J/g, vorzugsweise größer als 45 J/g, mehr bevorzugt größer als 50 J/g ist.

6. Zusammensetzung nach einem der Ansprüche 1 bis 5, **dadurch gekennzeichnet, dass** BAC das 1,3-BAC ist.

7. Zusammensetzung nach einem der Ansprüche 1 bis 6, **dadurch gekennzeichnet, dass** BAC das 1,3-BAC ist und XT ausgewählt ist aus 9T, 10T, 11T und 12T, insbesondere 10T, 11T und 12T.

8. Zusammensetzung nach einem der Ansprüche 1 bis 7, **dadurch gekennzeichnet, dass** XT 10T ist, wobei 10 dem 1,10-Decandiamin entspricht.

9. Zusammensetzung nach einem der Ansprüche 1 bis 8, **dadurch gekennzeichnet, dass** die Summe der Monomere, die die Terephthalsäure, das BAC und X ersetzen, gleich 0 ist.

10. Zusammensetzung nach einem der Ansprüche 1 bis 9, **dadurch gekennzeichnet, dass** die Zusammensetzung eine nicht-reaktive Zusammensetzung gemäß b) ist.

11. Zusammensetzung nach einem der Ansprüche 1 bis 9, **dadurch gekennzeichnet, dass** die Polyamidzusammensetzung eine reaktive Zusammensetzung aus Prepolymer gemäß a) und Vorläufer des Polyamidpolymers der Matrix aus thermoplastischem Material ist.

12. Zusammensetzung nach einem der Ansprüche 1 bis 10, **dadurch gekennzeichnet, dass** sie zusätzlich mindestens einen Zusatzstoff umfasst.

13. Zusammensetzung nach Anspruch 12, **dadurch gekennzeichnet, dass** das Additiv ausgewählt ist aus einem Antioxidationsmittel, einem Wärmestabilisator, einem UV-Absorber, einem Lichtstabilisator, einem Schlagzähmodifikator, einem Schmiermittel, einem anorganischen Füllstoff, einem Flammschutzmittel, einem Nukleierungsmittel und einem Farbmittel.

14. Zusammensetzung nach einem der Ansprüche 1 bis 13, **dadurch gekennzeichnet, dass** es sich um eine Formmassen-Zusammensetzung handelt.

15. Verfahren zum Herstellen eines thermoplastischen Materials, insbesondere eines mechanischen Teils oder Strukturteils auf Basis des Materials, mit einer Zusammensetzung wie nach einem der Ansprüche 1 bis 13 definiert, **dadurch gekennzeichnet, dass** es mindestens einen Polymerisationsschritt mindestens einer reaktiven Zusammensetzung a) wie nach Anspruch 9 definiert oder einen Schritt des Formgießens oder des Umsetzens mindestens einer nicht-reaktiven Zusammensetzung b) wie nach Anspruch 9 definiert durch Extrusion, Spritzgießen oder Formgießen umfasst.

16. Verfahren nach Anspruch 15, **dadurch gekennzeichnet, dass** es die folgenden Schritte umfasst:
i) Spritzgießen einer Zusammensetzung wie nach einem der Ansprüche 1 bis 13 definiert, wahlweise ohne Faserverstärkung, in eine offene oder geschlossene Form oder ohne Form,
ii) Polymerisationsreaktion im Fall einer reaktiven Zusammensetzung a) von Polyamid nach Anspruch 11 durch Erwärmen der Zusammensetzung aus Schritt i) mit Kettenverlängerung, je nach Fall durch Polykondensationsreaktion oder durch Polyadditionsreaktion in Masse in geschmolzenem Zustand, im Fall von Polykondensation wahlweise mit einer Beseitigung der Kondensationsprodukte unter Vakuum unter Verwendung eines Vakuumextraktionssystems, wenn es sich um eine geschlossene Form handelt, andernfalls und vorzugsweise wobei die Polykondensation in offener Form oder ohne Form durchgeführt wird,
iii) ein Umsetzen oder Formgießen der Zusammensetzung aus Schritt i) im Fall einer nicht-reaktiven Polyamidzusammensetzung b) zum Bilden des endgültigen Teils in einer Form oder mit einem anderen Umsetzungssystem, und im Fall einer reaktiven Zusammensetzung a) einen Schritt des Umsetzens durch Formgießen oder durch ein anderes Umsetzungssystem und gleichzeitig mit dem Polymerisationsschritt ii).

17. Teilkristallines Polyamidpolymer, **dadurch gekennzeichnet, dass** es dem Polymer der thermoplastischen Matrix des thermoplastischen Materials wie nach einem der Ansprüche 1 bis 13 definiert entspricht (oder ist), wobei das Polymer ein nicht-reaktives Polymer wie gemäß der Zusammensetzung b) definiert oder ein Polymer ist, das ausgehend von einer reaktiven Zusammensetzung wie gemäß der Zusammensetzung a) definiert erhalten werden kann.

18. Verwendung einer Zusammensetzung wie nach einem der Ansprüche 1 bis 13 definiert oder eines nicht-reaktiven Polymers wie gemäß der Zusammensetzung b) definiert oder eines Polymers, das ausgehend von einer reaktiven Zusammensetzung wie gemäß der Zusammensetzung a) definiert erhalten werden kann, zum Herstellen von mechanischen Teilen oder Strukturteilen auf Basis des thermoplastischen Materials, von einschichtigem oder mehrschichtigem Rohr oder von Folien.

19. Verwendung nach Anspruch 18, **dadurch gekennzeichnet, dass** die mechanischen Teile oder Strukturteile des Materials Anwendungen in dem Bereich Automobil, Elektrik oder Elektronik, Eisenbahn, Schifffahrt, Wind, Photovoltaik, Solarenergie einschließlich Solarzellen und Komponenten von Solarkraftwerken, Sport, Luft- und Raumfahrt, Straßentransport (bezüglich Lastkraftwagen), Hochbau, Tiefbau, Beschilderung und Freizeit betreffen.

20. Verwendung nach Anspruch 18, **dadurch gekennzeichnet, dass** die mechanischen Teile für Automobilanwendungen Teile unter der Motorhaube für den Transport von Fluid sind, besonders in Vorrichtungen für Lufteinlass, Kühlung (zum Beispiel durch Luft, Kühlflüssigkeit), zum Transport oder zur Übertragung von Kraftstoffen oder Fluiden.

21. Verwendung nach Anspruch 18, **dadurch gekennzeichnet, dass** die mechanischen Teile oder Strukturteile für Elektrik- oder Elektronikanwendungen elektrische und elektronische Investitionsgüter sind, wie gekapselte Elektromagnete, Pumpen, Telefone, Computer, Drucker, Faxgeräte, Modems, Monitore, Fernbedienungen, Kameras, Leistungsschalter, Ummantelungen für elektrische Kabel, Lichtwellenleiter, Schalter, Multimediasysteme.

22. Thermoplastisches Material, **dadurch gekennzeichnet, dass** es aus der Verwendung von mindestens einer Zusammensetzung für thermoplastisches Material wie gemäß einem der Ansprüche 1 bis 13 definiert resultiert.

23. Mechanisches Teil oder Strukturteil aus thermoplastischem Material, **dadurch gekennzeichnet, dass** es aus der Verwendung mindestens einer Zusammensetzung wie nach einem der Ansprüche 1 bis 13 definiert oder aus der Verwendung eines Polyamidpolymers wie nach Anspruch 17 definiert resultiert, oder dass es auf einem Material wie nach Anspruch 22 definiert basiert oder dass es durch ein Verfahren wie nach einem der Ansprüche 15 oder 16 definiert erhalten wird.

24. Teil nach Anspruch 23, **dadurch gekennzeichnet, dass** es sich um mechanische Teile für Automobilanwendungen, wie Teile unter der Motorhaube für den Transport von Fluid, besonders in Vorrichtungen für Lufteinlass, Kühlung (zum Beispiel durch Luft, Kühlflüssigkeit), zum Transport oder zur Übertragung von Kraftstoffen oder Fluiden (wie Öl, Wasser) handelt.

25. Teil nach Anspruch 23, **dadurch gekennzeichnet, dass** es sich um mechanische Teile oder Strukturteile für Elektrik- oder Elektronikanwendungen, wie elektrische und elektronische Investitionsgüter, wie gekapselte Elektromagnete, Pumpen, Telefone, Computer, Drucker, Faxgeräte, Modems, Monitore, Fernbedienungen, Kameras, Leistungsschalter, Ummantelungen für elektrische Kabel, Lichtwellenleiter, Schalter, Multimediasysteme handelt.

## Claims

1. A composition for a thermoplastic material comprising:
- 0 to 70 % by weight, preferably 20 to 60 % by weight, of short reinforcing fibers having a length of between 200 and 400 µm,
- 30 to 100 % by weight, preferably 40 to 80 % by weight, of a thermoplastic matrix based on at least one semi-crystalline polyamide polymer,
- 0 to 50 % of additives and/or other polymers,
where said composition is:
a) a reactive composition comprising or consisting of at least one reactive precursor polyamide prepolymer of said semi-crystalline polyamide polymer, or as an alternative to a),
b) a non-reactive composition of at least one polyamide polymer, said composition being that of said thermoplastic matrix defined above,
and said reactive polyamide prepolymer of composition a) and said polyamide polymer of composition b) comprising or consisting of at least one BACT/XT copolyamide wherein:
- BACT is a unit with an amide unit present at a molar content ranging from more than 70 to 99.1 %, preferably from 80 to 99 %, more preferably from 90 to 99 %, where BAC is chosen from 1,3-bis(aminomethyl)cyclohexyl (1,3-BAC), 1,4-bis(aminomethyl)cyclohexyl (1,4-BAC) and a mixture thereof, and T is terephthalic acid,
- XT is a unit with an amide unit present at a molar content ranging from 0.9 to less than 30 %, preferably from 1 to 20 %, more preferably from 1 to 10 %, where X is a C9 to C18 linear aliphatic diamine, preferably C9, C10, C11 and C12, and where T is terephthalic acid, preferably C10, C11 or C12.
- in the BACT and/or XT units, independently of each other, up to 30 mol%, preferably 20 mol%, particularly up to 10 mol% of terephthalic acid, relative to the total quantity of carboxylic diacids, can be replaced by other aromatic, aliphatic or cycloaliphatic carboxylic diacids comprising 6 to 36 carbon atoms, particularly 6 to 14 carbon atoms, and
- in the BACT and/or XT units, independently of each other, up to 30 mol%, preferably 20 mol%, particularly up to 10 mol%, of BAC and/or if applicable X, relative to the total quantity of the diamines, can be replaced by other diamines comprising from 4 to 36 carbon atoms, particularly 6 to 12 carbon atoms, and
- in the copolyamide, not more than 30 mol%, preferably not more than 20 %, preferably not more than 10 mol%, relative to the total quantity of the monomers, can be formed by lactams or aminocarboxylic acids, and
- provided that the sum of the monomers that replace terephthalic acid, BAC and X does not exceed a concentration of 30 mol%, preferably 20 mol%, preferably 10 mol%, relative to the total quantity of the monomers used in the copolyamide, and
- provided that BACT and XT units are still present in said polyamide polymer.

2. The composition according to claim 1, wherein said semi-crystalline polyamide polymer has a melting temperature Tm included from 290 °C to 340 °C, preferably included from 300 °C to 330 °C, more preferably included from 310 °C to 330 °C, as determined according to the ISO 11357-3 (2013) standard.

3. The composition according to claim 1 or 2, wherein said semi-crystalline polyamide polymer has a glass transition temperature Tg > 150 °C, preferably > 160 °C, more preferably > 170 °C, determined according to standard ISO 11357-2:2013.

4. The composition according to one of claims 1 to 3, wherein said semi-crystalline polyamide polymer has a difference between the melting temperature and the crystallization temperature Tm -Tc < 40 °C, preferably < 30 °C, determined according to standard ISO 11357-3:2013.

5. The composition according to one of claims 1 to 4, **characterized in that** the enthalpy of crystallization of the semi-crystalline polyamide polymer, measured by differential scanning calorimetry (DSC) according to standard ISO 11357-3:2013, is greater than 40 J/g, preferably greater than 45 J/g, more preferably greater than 50 J/g.

6. The composition according to one of claims 1 to 5, **characterized in that** the BAC is 1,3-BAC.

7. The composition according to one of claims 1 to 6, **characterized in that** the BAC is 1,3-BAC and XT is chosen from 9T, 10T, 11T and 12T, particularly 10T, 11T and 12T.

8. The composition according to one of claims 1 to 7, **characterized in that** XT is 10T, 10 corresponding to 1,10-decanediamine.

9. The composition according to one of claims 1 to 8, **characterized in that** the sum of the monomers that replace terephthalic acid, BAC and X is equal to 0.

10. The composition according to one of claims 1 to 9, **characterized in that** said composition is a non-reactive composition according to b).

11. The composition according to one of claims 1 to 9, **characterized in that** said polyamide composition is a reactive prepolymer composition according to a) and precursor of said polyamide polymer of said matrix of the thermoplastic material.

12. The composition according to one of claims 1 to 10, **characterized in that** it further comprises at least one additive.

13. The composition according to claim 12, **characterized in that** the additive is chosen from an antioxidant, a heat stabilizer, a UV absorber, a light stabilizer, an impact modifier, a lubricant, an inorganic filler, a flame retardant, a nucleating agent and a colorant.

14. The composition according to one of claims 1 to 13, **characterized in that** it is a molding composition.

15. A method for producing a thermoplastic material, in particular a mechanical part or a structural part based on said material, of composition as defined according to one of claims 1 to 13, **characterized in that** it comprises at least one step of polymerization of at least one reactive composition a) as defined according to claim 9 or a step of molding or of implementing at least one non-reactive composition b) as defined according to claim 9, by extrusion, injection or molding.

16. The method according to claim 15, **characterized in that** it comprises the following steps:
i) injection of a composition as defined according to one of claims 1 to 13, optionally devoid of fibrous strengthener, in an open or closed mold or without mold,
ii) polymerization reaction in the case of a reactive polyamide composition a) according to claim 11, by the heating of said composition from step i) with chain extension, according to the case, by polycondensation reaction or by polyaddition reaction, in the mass when melted, with optionally in the case of the polycondensation, an elimination under vacuum of the condensation products when it is a closed mold, using an extraction system under vacuum, otherwise and preferably with the polycondensation being conducted in an open mold or without a mold,
iii) an implementation or molding of said composition from step i) in the case of a non-reactive polyamide composition b) to form the final part in a mold or with another implementation system and, in the case of a reactive composition a), a step of implementation by molding or by another implementation system and simultaneously with polymerization step ii).

17. A semi-crystalline polyamide polymer, **characterized in that** it corresponds to (or is) the polymer of the thermoplastic matrix of said thermoplastic material, as defined according to one of claims 1 to 13, said polymer being a non-reactive polymer as defined according to said composition b) or a polymer that can be obtained from a reactive composition as defined according to said composition a).

18. A use of a composition as defined according to one of claims 1 to 13 or of a non-reactive polymer as defined according to said composition b) or a polymer that can be obtained from a reactive composition as defined according to said composition a), for the manufacture of mechanical or structural parts, based on said thermoplastic material, of single-layer or multi-layer tubing, or of film.

19. The use according to claim 18, **characterized in that** said mechanical or structural parts of said material relate to applications in the automotive field or in the fields of electrics or electronics, rail, marine, wind power, photovoltaic, solar, including solar panels and components for solar power plants, sports, aeronautics and space, road transport (relating to trucks), construction, civil engineering, signs and leisure.

20. The use according to claim 18, **characterized in that** said mechanical parts for applications in automotive are under-the-hood parts for the transport of fluid, in particular in devices for air intake, for cooling (for example by air, cooling liquid), for transport or transfer of fuels or fluids.

21. The use according to claim 18, **characterized in that** said mechanical or structural parts for applications in electrics or electronics are electrical or electronic equipment goods such as encapsulated solenoids, pumps, telephones, computers, printers, fax machines, modems, monitors, remote controls, cameras, circuit breakers, electric cable ducts, optical fibers, switches, multimedia systems.

22. A thermoplastic material, **characterized in that** it results from the use of at least one composition for thermoplastic material as defined according to one of claims 1 to 13.

23. A mechanical or structural part of thermoplastic material, **characterized in that** it results from the use of at least one composition as defined according to one of claims 1 to 13 or from the use of a polyamide polymer as defined according to claim 17 or that it is based on a material as defined according to claim 22 or that it is obtained by a method as defined according to one of claims 15 or 16.

24. The part according to claim 23, **characterized in that** it is mechanical parts for applications in automotive such as under-the-hood parts for the transport of fluid, in particular in devices for air intake, for cooling (for example by air, cooling liquid), for transport or transfer of fuels or fluids (such as oil, water).

25. The part according to claim 23, **characterized in that** it is mechanical or structural parts for applications in electrics or electronics such as electrical or electronic equipment goods such as encapsulated solenoids, pumps, telephones, computers, printers, fax machines, modems, monitors, remote controls, cameras, circuit breakers, electric cable ducts, optical fibers, switches, multimedia systems.
